(19) Europäisches Patentamt / European Patent Office / Office européen des brevets

(11) **EP 4 055 976 B1**

(12) **EUROPEAN PATENT SPECIFICATION**

(45) Date of publication and mention
of the grant of the patent:
**11.10.2023 Bulletin 2023/41**

(21) Application number: **20807510.1**

(22) Date of filing: **06.11.2020**

(51) International Patent Classification (IPC):
*H04W 74/08* $^{(2009.01)}$

(52) Cooperative Patent Classification (CPC):
**H04W 74/0833**

(86) International application number:
**PCT/IB2020/060466**

(87) International publication number:
**WO 2021/090261 (14.05.2021 Gazette 2021/19)**

(54) **TWO-STEP RACH TRANSMISSIONS USING GUARD BAND IN UNLICENSED SPECTRUM**

ZWEISTUFIGE RACH-ÜBERTRAGUNGEN MIT SCHUTZBAND IM UNLIZENZIERTEN SPEKTRUM

TRANSMISSIONS RACH À DEUX ÉTAPES UTILISANT UNE BANDE DE GARDE DANS UN SPECTRE SANS LICENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2019 US 201962931585 P**

(43) Date of publication of application:
**14.09.2022 Bulletin 2022/37**

(73) Proprietor: **Telefonaktiebolaget LM Ericsson (publ)**
**164 83 Stockholm (SE)**

(72) Inventor: **WANG, Min**
**977 53 Luleå (SE)**

(74) Representative: **Röthinger, Rainer**
**Wuesthoff & Wuesthoff**
**Patentanwälte PartG mbB**
**Schweigerstrasse 2**
**81541 München (DE)**

(56) References cited:
• **ERICSSON: "Channel Structure for Two-Step RACH", 3GPP DRAFT; R1-1910906 CHANNEL STRUCTURE FOR TWO-STEP RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chongqing, China; 20191014 - 20191018 5 October 2019 (2019-10-05), XP051808738, Retrieved from the Internet: URL:https://ftp.3gpp.org/tsg_ran/WG1_RL1/T SGR1_98b/Docs/R1-1910906.zip R1-1910906 Channel Structure for Two-Step RACH.docx [retrieved on 2019-10-05]**
• **ZTE: "RRC parameters for Rel-16 NR 2-step RACH", 3GPP DRAFT; R1-1911582, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chongqing, China; 20191014 - 20191020 31 October 2019 (2019-10-31), XP051814840, Retrieved from the Internet: URL:https://ftp.3gpp.org/tsg_ran/WG1_RL1/T SGR1_98b/Docs/R1-1911582.zip R1-1911582 RRC parameters for R16 NR_2stepRACH - post98bis.docx [retrieved on 2019-10-31]**

EP 4 055 976 B1

- **AD-HOC CHAIR (ERICSSON): "Chairman's notes of AI 7.2.2 NR-based Access to Unlicensed Spectrum", 3GPP DRAFT; R1-1911511, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chongqing, China; 20191014 - 20191020 22 October 2019 (2019-10-22), XP051798776, Retrieved from the Internet: URL:https://ftp.3gpp.org/tsg_ran/WG1_RL1/TSGR1_98b/Docs/R1-1911511.zip R1-1911511.doc [retrieved on 2019-10-22]**

**Description**

Related Applications

This application claims the benefit of provisional patent application serial number 62/931,585, filed November 6, 2019.

Technical Field

The present disclosure relates to random access in a cellular communications system.

Background

Next generation systems are expected to support a wide range of use cases with varying requirements ranging from fully mobile devices to stationary Internet of Things (IoT) or fixed wireless broadband devices. The traffic pattern associated with many use cases is expected to consist of short or long bursts of data traffic with varying lengths of waiting periods in between, which are herein referred to as "inactive states." In Third Generation Partnership Project (3GPP) New Radio (NR), both License Assisted Access (LAA) and standalone unlicensed operation are to be supported. Hence the procedure of Physical Random Access Channel (PRACH) transmission and/or Scheduling Request (SR) transmission in unlicensed spectrum is to be investigated in 3GPP. In the following, NR Unlicensed (NR-U) and a channel access procedure for an unlicensed channel based on Listen Before Talk (LBT) are introduced.

NR-U Introduction

In order to accommodate the ever increasing demand for data, NR is considered for both licensed and unlicensed spectrum. The 3GPP study item on NR-based access to unlicensed spectrum was approved at RAN-77. In this study item, compared to the Long Term Evolution (LTE) LAA, NR-U also needs to support Dual Connectivity (DC) and standalone scenarios, where the Medium Access Control (MAC) procedures including Random Access Channel (RACH) and a scheduling procedure on unlicensed spectrum are subject to the LBT failures. There was no such restriction in LTE LAA. In particular, since there was licensed spectrum in the LAA scenario, the RACH and scheduling related signaling can be transmitted on the licensed spectrum instead of the unlicensed spectrum.

For Discovery Reference Signal (DRS) transmission such as Primary Synchronization Signal (PSS) / Secondary Synchronization Signal (SSS), Physical Broadcast Channel (PBCH), Channel State Information Reference Signal (CSI-RS), control channel transmission such as Physical Uplink Control Channel (PUCCH) / Physical Downlink Control Channel (PDCCH), physical data channel such as Physical Uplink Shared Channel (PUSCH) / Physical Downlink Shared Channel (PDSCH), and uplink sounding reference signal such as Sounding Reference Signal (SRS) transmission, channel sensing should be applied to determine the channel availability before the physical signal is transmitted using the channel.

The Radio Resource Management (RRM) procedures in NR-U would be generally rather similar as in LAA, since NR-U is aiming to reuse LAA/ enhanced LAA (eLAA) / further enhanced LAA (feLAA) technologies as much as possible to handle the coexistence between NR-U and other legacy Radio Access Technologies (RATs). RRM measurements and reports comprise a special configuration procedure with respect to the channel sensing and channel availability.

Hence, channel access/selection for LAA was one of the important aspects for coexistence with other RATs such as WiFi. For instance, LAA has aimed to use carriers that are congested with WiFi.

In licensed spectrum, the User Equipment (UE) measures Reference Signal Received Power (RSRP) and Reference Signal Received Quality (RSRQ) of the downlink radio channel (e.g., Synchronization Signal Block (SSB), CSI-RS), and provides the measurement reports to its serving enhanced or evolved Node B (eNB) / NR base station (gNB). However, these measurements do not reflect the interference strength on the carrier. Another metric, Received Signal Strength Indicator (RSSI), is a measurement that can serve such a purpose. At the eNB/gNB side, it is possible to derive RSSI based on the received RSRP and RSRQ reports; however, this requires that they must be available. Due to the LBT failure, some reports in terms of RSRP or RSRQ may be blocked either due to the reference signal transmission (DRS) being blocked in the downlink or the measurement report being blocked in the uplink. Hence, the measurements in terms of RSSI are very useful. The RSSI measurements together with the time information concerning when and the duration of time that UEs have made the measurements can assist the gNB/eNB to detect the hidden node. Additionally, the gNB/eNB can measure the load situation of the carrier, which is useful for the network to prioritize some channels for load balancing and channel access failure avoidance purposes.

LTE LAA is defined to support measurements of averaged RSSI and channel occupancy for measurement reports. The channel occupancy is defined as percentage of time that RSSI was measured above a configured threshold. For this purpose, a RSSI Measurement Timing Configuration (RMTC) includes a measurement duration (e.g., 1-5 milliseconds (ms)) and a period between measurements (e.g., {40, 80, 160, 320, 640} ms).

*Channel Occupancy Time (COT) Sharing in NR-U*

For a node (e.g., NR-U gNB/UE, LTE-LAA eNB/UE, or WiFi Access Point (AP) / Station (STA)) to be allowed to transmit in unlicensed spectrum (e.g., 5 Gigahertz (GHz) band), it typically needs to perform a Clear Channel Assessment (CCA). This procedure typically includes sensing the medium to be idle for a number of time intervals. Sensing the medium to be idle can be done in different ways, e.g. using energy detection, using preamble detection, or using virtual carrier sensing, where the latter implies that the node reads control information from other transmitting nodes informing the node of when a transmission ends. After sensing the medium to be idle, the node is typically allowed to transmit for a certain amount of time, sometimes referred to as Transmission Opportunity (TXOP). The length of the TXOP depends on regulation and type of CCA that has been performed, but typically ranges from 1 ms to 10 ms. This duration is often referred to as a COT.

In WiFi, feedback of data reception Acknowledgements (ACKs) is transmitted without performing CCA. Preceding feedback transmission, a small time duration (called Short Interframe Spacing (SIFS)) is introduced between the data transmission and the corresponding feedback which does not include actual sensing of the channel. In Institute of Electrical and Electronics Engineers (IEEE) 802.11, the SIFS period (16 microseconds ($\mu$s) for 5 GHz Orthogonal Frequency Division Multiplexing (OFDM) Physical layers (PHYs)) is defined as:

$$aSIFSTime = aRxPHYDelay + aMACProcessingDelay + aRxTxTurnaroundTime$$

where:

- aRxPHYDelay defines the duration needed by the PHY layer to deliver a packet to the MAC layer,
- aMACProcessingDelay defines the duration that the MAC layer needs to trigger the PHY layer transmitting a response, and
- aRxTxTurnaroundTime defines the duration needed to turn the radio from reception into transmit mode.

Therefore, the SIFS duration is used to accommodate for the hardware delay to switch the direction from reception to transmission.

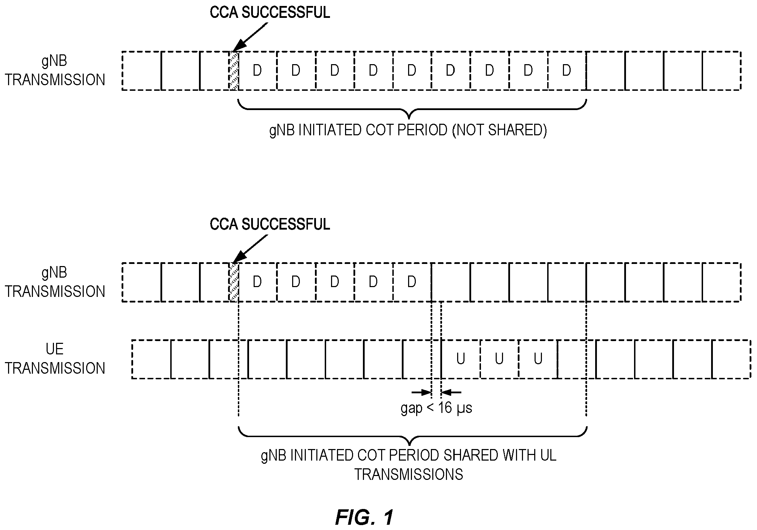

It is anticipated that, for NR-U, a similar gap to accommodate for the radio turnaround time will be allowed. For example, this will enable the transmission of PUCCH carrying Uplink Control Information (UCI) feedback as well as PUSCH carrying data and possible UCI within the same TXOP acquired by the initiating gNB without the UE performing CCA before PUSCH/PUCCH transmission as long as the gap between downlink and uplink transmission is less than or equal to 16 $\mu$s. Operation in this manner is typically called "COT sharing." An example on COT sharing is illustrated in Figure 1. More specifically, Figure 1 illustrates TXOPs both with and without COT sharing where CCA is performed by the initiating node (gNB). For the case of COT sharing the gap between downlink and uplink transmission is less than 16 $\mu$s.

*Channel Access Procedure in NR-U*

LBT is designed for unlicensed spectrum co-existence with other RATs. In this mechanism, a radio device applies a CCA check (i.e. channel sensing) before any transmission. The transmitter involves energy detection (ED) over a time period compared to a certain energy detection threshold (ED threshold) in order to determine if a channel is idle. In case the channel is determined to be occupied, the transmitter performs a random back-off within a contention window before next CCA attempt. In order to protect the ACK transmissions, the transmitter must defer a period after each busy CCA slot prior to resuming back-off. As soon as the transmitter has grasped access to a channel, the transmitter is only allowed to perform transmission up to a maximum time duration (namely, the maximum channel occupancy time (MCOT)). For Quality of Service (QoS) differentiation, a channel access priority based on the service type has been defined. For example, there are four LBT priority classes are defined for differentiation of channel access priorities between services using contention window size (CWS) and MCOT duration.

As described in 3GPP Technical Report (TR) 38.889 "Study on NR-based access to unlicensed spectrum, Release 16", v 16.0.0 [1], the channel access schemes for NR-based access for unlicensed spectrum can be classified into the following categories:

- Category 1: Immediate transmission after a short switching gap

◦ This is used for a transmitter to immediately transmit after a UL/DL switching gap inside a COT.

◦ The switching gap from reception to transmission is to accommodate the transceiver turnaround time and is no longer than 16 µs.

- Category 2: LBT without random back-off

    ◦ The duration of time that the channel is sensed to be idle before the transmitting entity transmits is deterministic.

- Category 3: LBT with random back-off with a contention window of fixed size

    ◦ The LBT procedure has the following procedure as one of its components. The transmitting entity draws a random number N within a contention window. The size of the contention window is specified by the minimum and maximum value of N. The size of the contention window is fixed. The random number N is used in the LBT procedure to determine the duration of time that the channel is sensed to be idle before the transmitting entity transmits on the channel.

- Category 4: LBT with random back-off with a contention window of variable size

    ◦ The LBT procedure has the following as one of its components. The transmitting entity draws a random number N within a contention window. The size of contention window is specified by the minimum and maximum value of N. The transmitting entity can vary the size of the contention window when drawing the random number N. The random number N is used in the LBT procedure to determine the duration of time that the channel is sensed to be idle before the transmitting entity transmits on the channel.

For different transmissions in a COT and different channels/signals to be transmitted, different categories of channel access schemes can be used.

*Wideband Operation in NR-U*

As for NR in licensed bands, it is expected that NR-U will support transmissions over a wide bandwidth (>> 20 Megahertz (MHz)), which is configured with multiple LBT subbands and each subband contains 20 MHz. In this case, a UE may not grasp all configured LBT subbands due to the LBT failures prior to a transmission.

Two possible approaches (namely Alt.1 and Alt. 2) for uplink transmissions in a wideband carrier are being discussed in the 3GPP. The relevant 3GPP agreements made at the RAN1#96bis are :

For UL transmissions in a serving cell with carrier bandwidth greater than LBT bandwidth, for the case where UE performs CCA before UL transmission, support at least Alt. 1 among the following alternatives

    o Alt. 1: UE transmits the PUSCH only if CCA is successful at UE in all LBT bandwidths of the scheduled PUSCH.
    o Alt. 2: UE transmits the PUSCH in all or a subset of LBT bandwidths of the scheduled PUSCH for which CCA is successful at the UE.
    o Decision on whether this alternative is supported will depend on feedback from RAN4

FFS on restrictions to the subset of LBT bandwidths, e.g., only contiguous LBT bandwidths allowed, based on feedback from RAN4

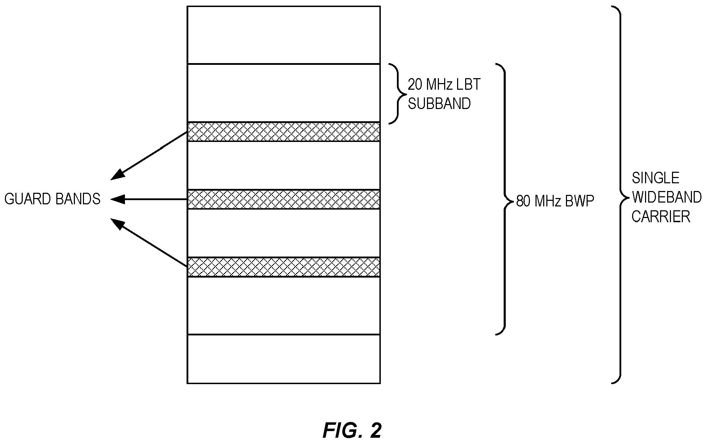

In a wideband carrier, a guard band is required to be configured between two adjacent LBT subbands in order to avoid or mitigate LBT operation and receiver performance being negatively impacted by potential in-carrier leakage. RAN4 may then define guard band requirements, e.g., minimum bandwidth, absolute location, etc. accordingly. It may be desirable that the guard bands are configured in a bandwidth part (BWP) as integer multiplies of a Physical Resource Block (PRB). An example of a wideband carrier containing multiple LBT subbands is illustrated in Figure 2. In the example of Figure 2, the wideband carrier contains a BWP with four 20 MHz subbands.

*RACH Procedures in NR Unlicensed Spectrum*

The ordinary four-step random access (RA) procedure has been the current standard for legacy systems such as LTE and NR Rel-15. It has been proposed to study a two-step RA procedure where the uplink messages (PRACH + Msg3) are sent simultaneously and similarly the two downlink messages (e.g. time advance command in Random Access Response (RAR) and contention resolution information) are sent as a simultaneous response in the downlink. In the legacy four-step RA procedure, one major purpose of the first two messages is to obtain uplink time alignment for the UE. In many situations, e.g. in small cells or for stationary UEs, this may not be needed since either a TA =0 will be sufficient (small cells) or a stored TA value from the last RA could serve also for the current RA (stationary UE). In future radio networks, it can be expected that these situations are common, both due to dense deployments of small cells and a great number of e.g. stationary IoT devices. A possibility to skip the message exchange in cases there is no need to obtain the TA value would lead to reduced RA latency and would be beneficial in several use cases, for example when transmitting infrequent small data packets. On the other hand, the two step RA will consume more resources since it uses contention-based transmission of the data. This means that the resources that are configured for the data transmission may often be unused.

If both the four-step and two-step RA are configured in a cell (and for the UE), the UE will choose its preamble from one specific set if it wants to do a four-step RA, and from another set if it wants to do a two-step RA. Hence a preamble partition is done to distinguish between four-step and two-step RA. Alternatively, the PRACH configurations are different for the two-step and four-step RA procedure, in which case it can be deduced from where the preamble transmission is done if the UE is doing a two-step or four-step procedure.

*Legacy Four-Step Random Access*

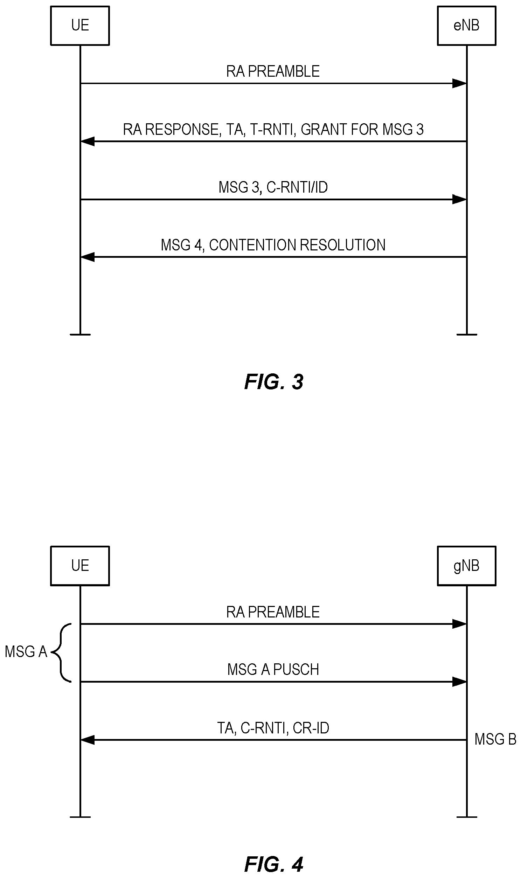

The legacy four-step RA has been used in LTE and is also proposed as baseline for NR. The principle of this procedure is shown in Figure 3.

Step 1 - Preamble transmission: The UE randomly selects a RA preamble (*PREAMBLE_INDEX*) which is then transmitted by the UE. When the eNB detects the preamble, it estimates the Timing alignment (TA) the UE should use in order to obtain UL synchronization at the eNB.

Step 2 - RAR: The eNB sends RAR including the TA, the Temporary Cell Radio Network Temporary Identifier (TC-RNTI) to be used by the UE, a *Random Access Preamble identifier* that matches the transmitted *PREAMBLE_INDEX,* and a grant for Msg3. The UE expects the RAR and, thus, monitors PDCCH addressed to the Random Access Radio Network Temporary Identifier (RA-RNTI) to receive the RAR message from the eNB until the configured RAR window (*ra-ResponseWindow*) has expired or until the RAR has been successfully received.

From 3GPP TS 38.321: "The MAC entity may stop ra-ResponseWindow (and hence monitoring for Random Access Response(s)) after successful reception of a Random Access Response containing Random Access Preamble identifiers that matches the transmitted PREAMBLE_INDEX"

Step 3 - "Msg3" (UE ID or UE-specific C-RNTI): In Msg3, the UE transmits its identifier (UE ID) for initial access or, if it is already in RRC_CONNECTED or RRC_INACTIVE mode and needs to e.g. resync, its UE-specific RNTI. If the eNB cannot decode Msg3 at the granted UL resources, it may send a Downlink Control Information (DCI) addressed to TC-RNTI for retransmission of Msg3. Hybrid Automatic Repeat Request (HARQ) retransmission is requested until the UE restarts the random access procedure from step 1 after reaching the maximum number of HARQ retransmissions or until Msg3 can be successfully received by the gNB.

Step 4 - "Msg4" (contention resolution): In Msg4, the eNB responds by acknowledging the UE ID or C-RNTI. The Msg4 gives contention resolution, i.e. only one UE ID or C-RNTI will be sent even if several UEs have used the same preamble (and the same grant for Msg3 transmission) simultaneously. For Msg4 reception, the UE monitors TC-RNTI (if it transmitted its UE ID in Msg3) or C-RNTI (if it transmitted its C-RNTI in Msg3).

In LTE, the four-step RA cannot be completed in less than 14 ms/TTIs/SFs.

*Two-Step Random Access*

The two-step RA gives much shorter latency than the ordinary four-step RA. In the two-step RA, the preamble and a message corresponding to Msg3 in the four-step RA are transmitted in the same or in two subsequent subframes (msgA). The Msg3 is sent on a resource dedicated to the specific preamble. This means that both the preamble and the Msg3 face contention, but contention resolution in this case means that either both preamble and Msg3 are sent without collision or both collide. The two-step RA procedure is depicted in Figure 4.

Upon successful reception of msgA, the gNB will respond with a msgB containing TA (which by assumption should not be needed or just give very minor updates) a possibly a contention resolution id and C-RNTI.

An issue that may occur if the UE TA is bad (e.g. using TA=0 in a large cell or using an old TA even though the UE has moved) is that only the preamble can be detected by the gNB. A transmission with an inaccurate TA value may interfere with transmissions from other UEs in the same cell. Additionally, the preamble signal has higher detection probability than the normal data due to its design pattern. In this case, the network may reply with an ordinary RAR giving the UE an opportunity to transmit an ordinary Msg3 on a scheduled resource. This is a fallback to four-step RA.

*3GPP Discussion Progress on Two- Step RACH Channel Structure*

Agreements in 3GPP RAN1 regarding the 2-step RACH channel structure are as follows:

**RAN1#96**

**Agreements:**

- PUSCH occasion for two-step RACH is defined as

  ∘ the time-frequency resource for payload transmission

**RAN1#96bis**

**Agreements:**

- One or more PUSCH occasion(s) within an msgA PUSCH configuration period are configured.

  ∘ FFS msgA PUSCH configuration period, e.g.

    ▪ For opt.1 with separate PUSCH configuration, msgA PUSCH configuration period may or may not be the same as PRACH configuration period
    ▪ For opt.2 PUSCH configuration with relative location, msgA PUSCH configuration period is the PRACH configuration period.

**Agreements:**

- PUSCH resource unit for two-step RACH is defined as

  ∘ The PUSCH occasion and DMRS port / DMRS sequence used for an msgA payload transmission.

    ▪ FFS support only one or both of DMRS port / DMRS sequence
    ▪ The DMRS sequence generation mechanism should follow Rel.15.

**Working assumption:**

- At least support one-to-one and multiple-to-one mapping between preambles in each RO and associated PUSCH resource unit.

  ∘ Configurable number of preambles (including one or multiple) mapped to one PUSCH resource unit
  ∘ FFS one-to-multiple mapping

- Companies are strongly encouraged to perform additional evaluations/analysis

At RAN1#97, the agreements below were made regarding multiple MsgA PUSCH configurations.

**Agreements:**

- Support multiple msgA PUSCH configurations for a UE

  ○ FFS the maximum number of configurations
  ○ FFS which parameters, if any, are common for all configurations
  ○ FFS indication of different msgA PUSCH configurations, e.g. by different ROs, by different preamble groups, or by UCI
  ○ FFS whether or not resources for different msgA PUSCHs can be overlapped in time-frequency, and if so, any spec impact

- FFS whether the frequency resource of msgA PUSCH should be limited to the bandwidth of PRACH
- FFS validation rule of msgA PUSCH

*Mapping between PRACH Preamble Resource and PUSCH Resource Unit*

The definition of PUSCH resource unit for two-step RACH was agreed in RAN1#96bis. PUSCH resource unit (PRU) is the PUSCH occasion (PO) and Demodulation Reference Signal (DMRS) port / DMRS sequence used for an MsgA payload transmission. For mapping between preambles in each RACH occasion (RO) and associated PUSCH resource unit, the design may consider factors such as resource utilization efficiency and decoding complexity at the gNB.

At least one-to-one and multiple (N)-to-one mapping need to be supported. For different RA events and different purposes, the payload size of a MsgA may vary in a range from a few bytes to a few hundred bytes. For better spectral efficiency, different mapping rules between preambles in each RO and associated PUSCH resource unit are expected such as:

- One-to-One Mapping,
- Many-to-One Mapping, and
- One-to-Many Mapping.

As was agreed in RAN1#97, multiple msgA PUSCH configurations are possible. Different MsgA PUSCH configurations may be of different properties in terms of the configuration periodicity, PO size (i.e., the resource size associated with the PO), number of POs/PRUs within each configuration period, MCS, etc. These properties would affect the data transmission performance in terms of QoS indicators such as latency, transmission reliability, and Transport Block (TB) size. The different configurations could enable the UE to select a TB size suitable to the number of bits it needs to transmit or the reliability it needs. For example, a UE that only needs to obtain time alignment may select a smaller PUSCH resource than a UE doing initial access which would require transmission of a Radio Resource Control (RRC) message in msgA.

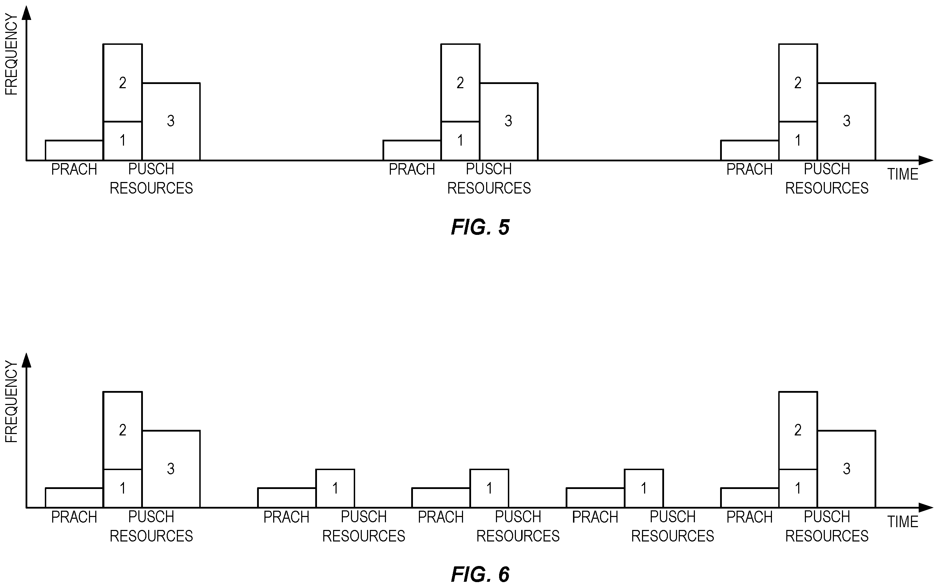

An example configuration of PRACH and PUSCH is shown in Figure 5.

In RAN1#96, it was left For Future Study (FFS) if different configuration periods for PRACH and PUSCH would be supported. In Figure 6, an example where the PRACH and PUSCH have different configurations periods is illustrated. In particular, PUSCH configuration "1" has a different periodicity than PUSCH configuration "2" and "3."

Non-patent literature ERICSSON: "Channel Structure for Two-Step RACH", 3GPP DRAFT; R1-1910906, 5 October 2019 (2019-10-05), discusses MsgA channel structure for 2-step RACH and provides considerations related to NR-U for the msgA slot structure and PUSCH resource determination. In particular, Msg A configurations with the same configuration periodicity for Msg A PRACH and PUSCH are discussed. Multiple slots, each containing a variable number of PUSCH occasions in time and frequency can be configured, where a guard period in time may or may not be used. The configurations may or may not overlap in time.

Summary

Systems and methods for two-step Random Access Channel, RACH, transmissions using a guard band (e.g., in unlicensed spectrum) are disclosed. In one embodiment, a method performed by a wireless communication device comprises obtaining one or more MsgA Physical Uplink Shared Channel (PUSCH) configurations for two-step random access, the one or more MsgA PUSCH configurations comprising a MsgA PUSCH configuration that comprises a PUSCH occasion (PO) for two-step random access that at least partially overlaps a guard band between two adjacent subbands. The method further comprises selecting the PO that at least partially overlaps the guard band between the two adjacent subbands for a MsgA transmission for a two-step random access procedure and determining that the MsgA transmission using the selected PO that at least partially overlaps the guard band between the two adjacent subbands is allowable. The method further comprises, upon determining that the MsgA transmission using the selected PO is allowable, transmitting the MsgA transmission for the two-step random access procedure, the MsgA transmission comprising a MsgA PUSCH payload transmitted in the PO that at least partially overlaps the guard band. In this manner, a two-step RACH transmission in a guard band in unlicensed spectrum is provided.

In one embodiment, determining that the MsgA transmission using the selected PO that at least partially overlaps the guard band between the two adjacent subbands is allowable comprises performing Listen Before Talk (LBT) procedures for the two adjacent subbands and determining that the MsgA transmission using the selected PO is allowable based on the LBT procedures for the two adjacent subbands.

In one embodiment, the MsgA PUSCH configuration that comprises the PO that at least partially overlaps the guard band comprises: (a) information that indicates that the PO at least partially overlaps the guard band, (b) information that indicates a location of the guard band that is at least partially overlapped by the PO, (c) information that indicates a size of the guard band that is at least partially overlapped by the PO, (d) information about the two adjacent subbands of the guard band that is at least partially overlapped by the PO, or (e) any two or more of (a)-(d).

In one embodiment, selecting the PO that at least partially overlaps the guard band between the two adjacent subbands for a MsgA transmission comprises selecting the PO that at least partially overlaps the guard band between the two adjacent subbands for the MsgA transmission based on a preamble selected for the MsgA transmission, a size of the MsgA PUSH payload for the MsgA transmission, or both the preamble and the size of the MsgA PUSCH payload.

In one embodiment, selecting the PO that at least partially overlaps the guard band between the two adjacent subbands for a MsgA transmission comprises selecting the PO that at least partially overlaps the guard band between the two adjacent subbands for the MsgA transmission based on a purpose of the random access.

In one embodiment, selecting the PO that at least partially overlaps the guard band between the two adjacent subbands for a MsgA transmission comprises selecting the PO that at least partially overlaps the guard band between the two adjacent subbands for the MsgA transmission based on a priority order or priority level associated with the random access.

In one embodiment, selecting the PO that at least partially overlaps the guard band between the two adjacent subbands for a MsgA transmission comprises selecting the PO that at least partially overlaps the guard band between the two adjacent subbands for the MsgA transmission based on whether or not MsgA payload transmission is permitted in a guard band for a respective cell, carrier, bandwidth part, or subband.

In one embodiment, selecting the PO that at least partially overlaps the guard band between the two adjacent subbands for a MsgA transmission comprises selecting the PO that at least partially overlaps the guard band between the two adjacent subbands for the MsgA transmission based on whether or not MsgA payload transmission in a guard band is enabled.

In one embodiment, the method further comprises sending, to the base station, capability information comprising information that indicates that the wireless communication device is capable of transmitting MsgA payload transmissions in a guard band.

In one embodiment, the method further comprises sending, to the base station, an indication that the MsgA transmission uses the guard band. In one embodiment, the indication is an implicit indication provided by the PO in which the MsgA preamble is transmitted. In one embodiment, sending the indication comprises sending the indication in Uplink Control Information (UCI), sending the indication via signaling, sending the indication in a Medium Access Control (MAC) Control Element (CE), or sending the indication in a MAC subheader. In one embodiment, the indication is comprised in the MsgA payload, in a MAC CE comprised in the MsgA payload, or in a MAC subheader comprised in the MsgA payload.

Corresponding embodiments of a wireless communication device are also disclosed. In one embodiment, a wireless communication device is adapted to obtain one or more MsgA PUSCH configurations comprising a MsgA PUSCH configuration that comprises a PO that at least partially overlaps a guard band between two adjacent subbands, select the PO that at least partially overlaps the guard band between the two adjacent subbands for a MsgA transmission, and determine that the MsgA transmission using the selected PO that at least partially overlaps the guard band between the two adjacent subbands is allowable. The wireless communication device is further adapted to, upon determining that the MsgA transmission using the selected PO is allowable, transmit the MsgA transmission, the MsgA transmission comprising a MsgA PUSCH payload transmitted in the PO that at least partially overlaps the guard band.

In one embodiment, a wireless communication device comprises one or more transmitters, one or more receivers, and processing circuitry associated with the one or more transmitters and the one or more receivers. The processing circuitry is configured to cause the wireless communication device to obtain one or more MsgA PUSCH configurations comprising a MsgA PUSCH configuration that comprises a PO that at least partially overlaps a guard band between two adjacent subbands, select the PO that at least partially overlaps the guard band between the two adjacent subbands for a MsgA transmission, and determine that the MsgA transmission using the selected PO that at least partially overlaps the guard band between the two adjacent subbands is allowable. The processing circuitry is further configured to cause the wireless communication device to, upon determining that the MsgA transmission using the selected PO is allowable, transmit the MsgA transmission, the MsgA transmission comprising a MsgA PUSCH payload transmitted in the PO that at least partially overlaps the guard band.

Embodiments of a method performed by a base station are also disclosed. In one embodiment, a method performed by a base station of a cellular communications system comprises providing, to a wireless communication device, one or more MsgA PUSCH configurations comprising a MsgA PUSCH configuration that comprises a PO that at least partially overlaps a guard band between two adjacent subbands. The method further comprises receiving, from the wireless communication device, a MsgA transmission, the MsgA transmission comprising a MsgA PUSCH payload transmitted in a PO that at least partially overlaps a guard band between two adjacent subbands.

In one embodiment, the method further comprises receiving, from the wireless communication device, an indication that the MsgA transmission uses the guard band.

In one embodiment, the MsgA PUSCH configuration comprises one or more of the following: (a) information that indicates that the PO at least partially overlaps the guard band, (b) information that indicates a location of the guard band that is at least partially overlapped by the PO, (c) information that indicates a size of the guard band that is at least partially overlapped by the PO, (d) information about the two adjacent subbands of the guard band that is at least partially overlapped by the PO, or (e) any two or more of (a)-(d).

In one embodiment, the guard band and the two adjacent subbands are in unlicensed spectrum, and the method further comprises determining that subsequent transmissions can be scheduled in the guard band using channel occupancy time sharing and scheduling one or more subsequent transmissions using resources that at least partially overlap the guard band based on the determining.

In one embodiment, the method further comprises receiving, from the wireless communication device, capability information comprising information that indicates that the wireless communication device is capable of transmitting MsgA payload transmissions in a guard band.

In one embodiment, the method further comprises sending, to the wireless communication device, information that configures whether MsgA payload transmissions in a guard band are permitted.

In one embodiment, the method further comprises sending, to the wireless communication device, information that configures whether MsgA payload transmissions are permitted in a guard band per carrier, per cell, per bandwidth part, or per subband.

In one embodiment, the method further comprises sending, to the wireless communication device, information that enables MsgA payload transmissions in a guard band. In one embodiment, the method further comprises deciding to enable MsgA payload transmissions in a guard band based on cell load or LBT statistics.

Corresponding embodiments of a base station are also disclosed. In one embodiment, a base station for a cellular communications system is adapted to provide, to a wireless communication device, one or more MsgA PUSCH configurations comprising a MsgA PUSCH configuration that comprises a PO that at least partially overlaps a guard band between two adjacent subbands. The base station is further adapted to receive, from the wireless communication device, a MsgA transmission, the MsgA transmission comprising a MsgA PUSCH payload transmitted in a PO that at least partially overlaps a guard band between two adjacent subbands.

In one embodiment, a base station for a cellular communications system comprises processing circuitry configured to cause the base station to provide, to a wireless communication device, one or more MsgA PUSCH configurations comprising a MsgA PUSCH configuration that comprises a PO that at least partially overlaps a guard band between two adjacent subbands. The processing circuitry is further configured to cause the base station to receive, from the wireless communication device, a MsgA transmission, the MsgA transmission comprising a MsgA PUSCH payload transmitted in a PO that at least partially overlaps a guard band between two adjacent subbands.

Brief Description of the Drawings

The accompanying drawing figures incorporated in and forming a part of this specification illustrate several aspects of the disclosure, and together with the description serve to explain the principles of the disclosure.

Figure 1 illustrates an example of Channel Occupancy Time (COT) sharing;
Figure 2 illustrates an example of a wideband carrier containing multiple Listen Before Talk (LBT) subbands;
Figure 3 illustrates the legacy four-step random access procedure used in Long Term Evolution (LTE);
Figure 4 illustrates a two-step random access procedure;
Figure 5 illustrates an example configuration of a Physical Random Access Channel (PRACH) and Physical Uplink Shared Channel (PUSCH) for the two-step random access procedure;
Figure 6 illustrates an example similar to that of Figure 5 but where there are different configuration periods for PRACH and PUSCH;
Figure 7 illustrates one example of a cellular communications system in which embodiments of the present disclosure may be implemented;
Figure 8 illustrates an example wherein three PUSCH occasions (POs) are configured for a User Equipment (UE) in the same subband in the same slot (or mini-slot) and in which MsgA transmission for a two-step random access procedure can be transmitted in a guard band between two adjacent subbands in accordance with embodiments of the present disclosure;

Figure 9 illustrates an example procedure for MsgA payload transmission with guard bands in accordance with embodiments of the present disclosure;

Figure 10 illustrates the operation of a wireless communication device (e.g., a UE) and a base station to perform a two-step random access procedure in which a MsgA payload transmission uses a PO that at least partially overlaps a guard band between two adjacent subbands (e.g., two adjacent LBT subbands) in accordance with some embodiments of the present disclosure;

Figure 11 illustrates the operation of a wireless communication device (e.g., a UE) and a base station to perform a two-step random access procedure in which a MsgA payload transmission uses a PO that at least partially overlaps a guard band between two adjacent subbands (e.g., two adjacent LBT subbands) in accordance with some other embodiments of the present disclosure;

Figures 12 through 14 are schematic block diagrams of example embodiments of a radio access node;

Figures 15 and 16 are schematic block diagrams of example embodiments of a wireless communication device;

Figure 17 illustrates an example embodiment of a communication system in which embodiments of the present disclosure may be implemented;

Figure 18 illustrates example embodiments of the host computer, base station, and UE of Figure 17; and

Figures 19 through 22 are flow charts that illustrate example embodiments of methods implemented in a communication system such as that of Figure 17.

Detailed Description

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Function (AMF), a UPF, a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

There currently exist certain challenge(s). In Carrier Aggregation (CA) in 3GPP NR, each Component Carrier (CC) has a guard band defined, in the case of 3GPP, by RAN4. However, from the RAN4 perspective, there is no requirement that the guard bands between two or more *contiguous carriers* are left empty. Hence, optimizations may be considered whereby the transmitting device uses the Physical Resource Blocks (PRBs) in the guard bands (referred to herein as guard PRBs) and the receiving device assumes that data symbols are mapped to these PRBs.

For a wideband carrier or bandwidth part (BWP) containing multiple Listen Before Talk (LBT) subbands, once the guard bands are needed, the default BWP configurations should skip all the guard bands assuming all the adjacent subbands are not available for data transmission and reception. This reduces the spectral utilization efficiency.

However, when two adjacent subbands are both available, the guard band between them may not be needed. In other words, the guard bands can be utilized for transmission or reception in such cases, which can improve the resource utilization efficiency. Since the gNB is not aware of LBT results for uplink transmissions since the LBT operation is performed at the UE side, in order to utilize the guard bands for uplink MsgA payload transmissions in a two-step Random Access Channel (RACH) procedure, the UE must report the LBT results to its serving gNB so that the gNB can reconfigure MsgA PUSCH configurations to the UE. However, this is not feasible since the UE may have no uplink grant resource to send the report when a two-step random access (RA) event is triggered.

In addition, RAN1 has made the agreement below in RAN1#98bis regarding intra-carrier guard bands:
Agreement:
The intra-carrier guard bands on a carrier can be semi-statically adjusted with an RB level granularity. The RAN4 minimum guard band requirements are used as the guard bands when no semi-static adjustment is applied.

- The guard bands adjustments do not affect the already agreed restrictions on PUCCH resource allocation.
- FFS: Whether and how to handle the case where the intra-carrier guard bands are part of a resource allocation

From above agreement, it is for future study (FFS) how to handle the case where the guard bands are part of a resource allocation. Therefore, for two-step RA, how to handle the resource allocation which contains the guard band resources will be a related question. Therefore, it is necessary to study how to utilize the guard bands for uplink MsgA payload transmissions, especially in case the cell has high RACH load so that the PUSCH resources may congested.

Certain aspects of the present disclosure and their embodiments may provide solutions to the aforementioned or other challenges. Systems and methods are disclosed herein for transmission of MsgA payload using guard band resources. In one embodiment, a base station (e.g., gNB) configures a wireless communication device (WCD) (e.g., a UE) with Physical Uplink Shared Channel (PUSCH) resources (i.e., a PUSCH occasion (PO)) occupying PRBs in a guard band in a MsgA PUSCH configuration(s). In some embodiments, the base station further configures the WCD about whether the WCD is allowed to use guard band resources for transmission of MsgA payload.

In some embodiments, the WCD decides if a configured guard band(s) is(are) available for MsgA payload transmissions depending on if adjacent subbands associated with the guard band pass an LBT operation. In some embodiments, the WCD may further indicate to the base station if a MsgA payload transmission uses resources in a guard band. Upon reception of the information, the base station can decide whether to schedule resources in a guard band for subsequent transmissions.

Certain embodiments may provide one or more of the following technical advantage(s). Embodiments of the present disclosure may enhance the spectrum utilization efficiency.

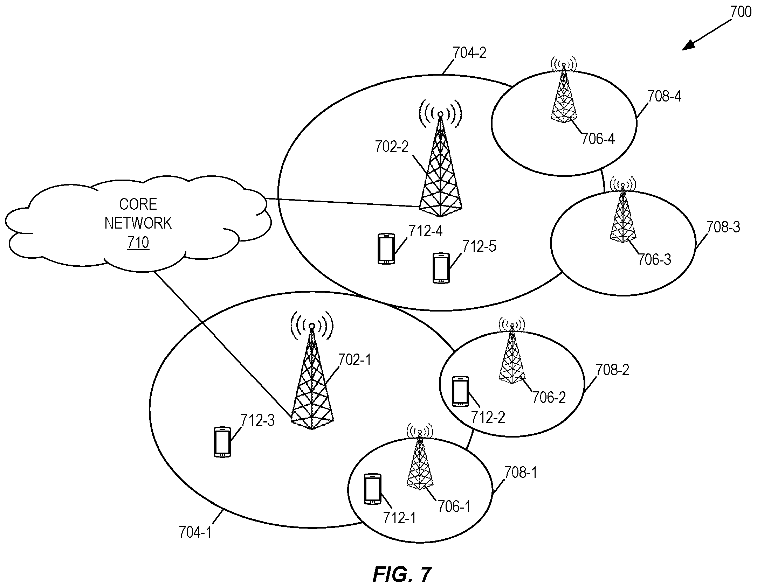

Figure 7 illustrates one example of a cellular communications system 700 in which embodiments of the present disclosure may be implemented. In the embodiments described herein, the cellular communications system 700 is a 5G system (5GS) including a Next Generation RAN (NG-RAN) (also referred to herein as a NR RAN). However, the present disclosure is not limited thereto. Rather, the embodiments disclosed herein may be utilized in other types of wireless or cellular communications networks that operate in unlicensed spectrum. In this example, the RAN includes base stations 702-1 and 702-2, which in the NG-RAN are referred to as gNBs (NR base station) or ng-eNBs (LTE RAN nodes connected to 5GC), controlling corresponding (macro) cells 704-1 and 704-2. The base stations 702-1 and 702-2 are generally referred to herein collectively as base stations 702 and individually as base station 702. Likewise, the (macro) cells 704-1 and 704-2 are generally referred to herein collectively as (macro) cells 704 and individually as (macro) cell 704. The RAN may also include a number of low power nodes 706-1 through 706-4 controlling corresponding small cells 708-1 through 708-4. The low power nodes 706-1 through 706-4 can be small base stations (such as pico or femto base stations) or Remote Radio Heads (RRHs), or the like. Notably, while not illustrated, one or more of the small cells 708-1 through 708-4 may alternatively be provided by the base stations 702. The low power nodes 706-1 through 706-4 are generally referred to herein collectively as low power nodes 706 and individually as low power node 706. Likewise, the small cells 708-1 through 708-4 are generally referred to herein collectively as small cells 708 and individually as small cell 708. The cellular communications system 700 also includes a core network 710, which in the 5GS is referred to as the 5G core (5GC). The base stations 702 (and optionally the low power nodes 706) are connected to the core network 710.

The base stations 702 and the low power nodes 706 provide service to wireless communication devices 712-1 through 712-5 in the corresponding cells 704 and 708. The wireless communication devices 712-1 through 712-5 are generally referred to herein collectively as wireless communication devices 712 and individually as wireless communication device 712. In the following description, the wireless communication devices 712 are oftentimes UEs and as such referred to as UEs 712, but the present disclosure is not limited thereto. Likewise, the base stations 702 are oftentimes gNBs and as such referred to as gNBs 702, but the present disclosure is not limited thereto.

In the following, example embodiments the proposed solutions are described in the context of NR unlicensed spectrum (NR-U). However, the solutions described herein are not limited to NR-U scenarios. They are also applicable to other unlicensed operation scenarios such as LTE License Assisted Access (LAA)/enhanced LAA (eLAA)/further enhanced LAA (feLAA)/MuLTEfire. In addition, some of the proposed solutions are also applicable to licensed operations where guard-band regions may be feasible to use for uplink transmissions. In the example embodiments described below, a term "subband" is used to represent a bandwidth segment of a carrier. The UE 712 can perform independent LBT operation on each subband. However, as used herein, the term "subband" is a non-limiting term that refers to a portion of a total bandwidth of a carrier. Other similar terms are equally applicable to the below embodiments. The guard-bands between adjacent subbands within a carrier are referred to herein as "intra-carrier guard bands."

As a first embodiment, a UE 712 can be configured with uplink PUSCH resources (i.e., a PO(s)) in a guard band region for two-step RA. These PUSCH resources are contained in one or more MsgA PUSCH configurations. For each MsgA PUSCH configuration, the gNB 702 can indicate one or more of the following (but preferably all of the following):

1) Whether or not a PO is overlapped with a guard band. The information may be available for every PO.
2) The location and size of the guard band that is overlapped with POs contained in the configuration.
3) Information on the adjacent subbands associated with the guard band that is overlapped with POs contained in the configuration.

If the UE 712 is allowed (e.g., by the gNB configuration) to use a guard band region for MsgA payload transmission, the UE 712 can decide if a configured PUSCH resource (i.e., a PO) that is within or overlapped with a guard band is usable depending on LBT outcome in the adjacent subbands of the guard band. That is the PUSCH resource (i.e., PO) configured in the guard band is usable if the LBT succeeds in both adjacent subbands associated with the guard band. In this case, both adjacent subbands are available for the UE 712 to transmit uplink data.

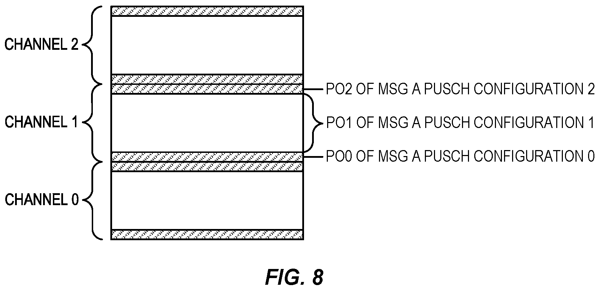

Figure 8 illustrates an example wherein three POs are configured (in three MsgA PUSCH configurations) in the same subband in the same slot (or mini-slot) for a UE 712. In particular, the three MsgA PUSCH configurations are for the lower guard band, the operation band, and the upper guard band of Channel 1. If LBT succeeds in Channel 1 and Channel 0 but fails in Channel 2, the UE can use PO0 and PO1 for MsgA payload transmission. If LBT succeeds in Channel 1 and Channel 2 but fails in Channel 0, the UE can use PO1 and PO2 for MsgA payload transmission.

As a second embodiment, whenever a two-step RA procedure is triggered for a UE 712, the UE 712 selects a preamble and a PO fitting to the size of the MsgA payload. If the selected PO occupies a guard band, the UE 712 performs LBTs in subbands which are neighboring to the guard band. The UE 712 can use the PO only in case the LBT operation succeeds in both neighboring subbands. Otherwise, the UE 712 may choose to use another PO which does not occupy a guard band region for transmission of the MsgA.

As a third embodiment, whenever a two-step RA procedure is triggered for a UE 712, the UE 712 selects a preamble and a PO fitting to the size of MsgA payload. Upon reception of the preamble, the gNB 702 may have several options to learn if the associated subsequent PO is overlapped with a guard band. If the PO is overlapped with a guard band, the gNB 702 can also learn the location and size of the guard band.

- Option 1: There is a preconfigured mapping relation between a preamble and a PO, and the gNB 702 learns the related information based on detected preamble.
- Option 2: The UE 712 may include the information in MsgA payload via any of the following means:

   ◦ the information is included in the uplink control information (UCI) on PUSCH, the UCI may be mapped to the PUSCH similar as what has designed for CG-UCI;
   ◦ the information is included in a Radio Resource Control (RRC) signaling which is carried in MsgA payload;
   ◦ the information is included in a Medium Access Control (MAC) Control Element (CE) which is carried in MsgA payload; or
   ◦ the information is included in a MAC subheader in MsgA payload.

When the gNB 702 gets the information on guard bands, the gNB 702 can decide if the subsequent uplink (UL) or downlink (DL) transmissions can use the guard bands. In one example, it is feasible for the gNB 702 to share the DL transmissions with UL transmissions from a UE 712 in a same Channel Occupancy Time (COT). In this case, the gNB 702 can directly schedule resources in the guard band for UL or DL transmissions without performing LBT operations.

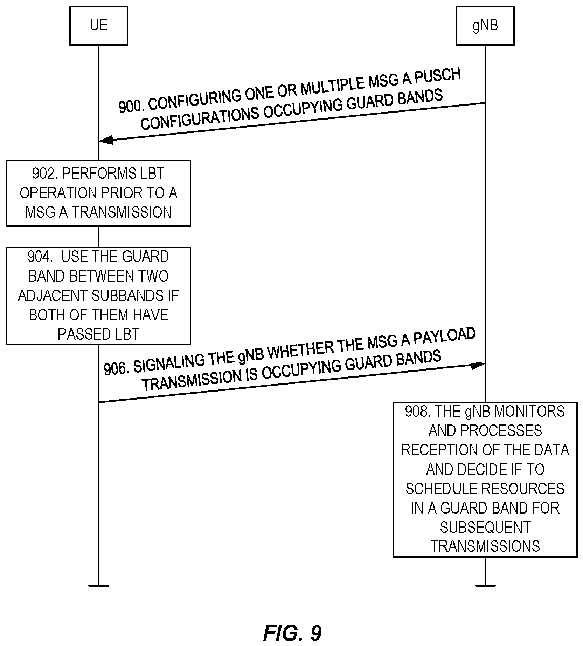

An example of a MsgA payload transmission with guard bands is illustrated in Figure 9. As illustrated, a gNB 702 configures a UE 712 with one or more MsgA PUSCH configurations occupying a guard band (step 900). In other words, as described above, a MsgA PUSCH configuration occupying a guard band is a MsgA PUSCH configuration having a PO that at least partially overlaps at guard band between adjacent subbands (i.e., a PO that defines time-frequency resources that at least partially overlap a guard band between adjacent subbands). The UE 712 performs a LBT operation before transmission of MsgA for a two-step RA procedure, as described above (step 902). In this example, the UE 712 desires to determine whether it is allowed to use the PO of a particular MsgA PUSCH configuration that overlaps a particular guard band. As such, this LBT operation includes a LBT procedure for the two adjacent subbands of that particular guard band. The UE 712 uses the guard band for MsgA transmission (i.e., uses the PO comprised in the MsgA PUSCH configuration that at least partially overlaps the guard band) if the LBT operation for both of the adjacent subbands is a success (i.e., the subbands are clear) (step 904). Optionally, the UE 712 may also signal an indication to the gNB 702 that indicates that the MsgA PUSCH payload is at least partially in the guard band, as described above (step 906). As discussed above, in some embodiments, the gNB 702 monitors and processes the MsgA transmission and the received indication and determines whether to schedule UL and/or DL resources in the guard band for subsequent transmissions (e.g., using COT sharing) (step 908).

As a fourth embodiment, for a two-step RA, a UE 712 selects a PO covering a guard band region for the RA considering the RA purpose or the priority order associated with the RA. For a RA associated with high priority or urgent latency requirement, the UE 712 selects a PO which does not overlap with any guard band. While for a RA associated with low priority or long latency requirement, the UE 712 selects a PO which occupies PRBs in a guard band. For UEs 712 in RRC IDLE, the typical events are initial access or requesting system information (SI). There are limited ways to determine a priority order for a RA event, such as:

- Determined based on the data that triggers the RA

   ◦ Application ID or some other global indication of application type can be used. Typically, each app running in Android or IOS has an Android application id (= OS specific application ID identifier) assigned by the app developer.

- The UE's access class or access category which is typically used for the initial access control, e.g., access barring.

Please note that the access class or access category may be also applicable to UEs 712 in RRC Connected or RRC Inactive, since the term "access category" was introduced in NR Rel-15 for an unified access framework including accesses triggered in RRC IDLE.

For UEs 712 in RRC Connected or RRC Inactive, the typical events are RA to obtain a grant, hand over, regaining of synch, beam failure recovery (BFR), etc. In one option, in NR Rel-15, RA events for handover and BFR are prioritized over other RA events.

In another option, the priority level of a RA event is determined considering the priority level of data, i.e. the data that triggers the RA for obtaining a grant). For example, the priority level of a RA event may be determined considering:

- the Logical Channel (LCH) priority of a LCH containing the data, or
- the other Quality of Service (QoS) identifiers, like the radio bearer identity (ID), logical channel group ID, or session/flow ID (e.g., Fifth Generation (5G) QoS Identifier (5QI), or QoS Flow Identifier (QFI) in NR network, while QoS Class Identifier (QCI) in LTE network) may be also applied.

As a fifth embodiment, whether or not to use a guard band region for MsgA payload transmission may be configured per cell, carrier, BWP, or subband. Different options are configured for different serving cell, carrier, BWP, or subband.

As a sixth embodiment, whether or not to use a guard band region for MsgA payload transmission may be enabled or disabled based on measured channel occupancy or LBT statistics. In one example, UEs 712 are allowed to use a guard band between LBT subbands for MsgA payload transmission if the associated cell, BWP, carrier, or subband is experiencing low load since, in this case, the UE 712 has higher probability to grasp more than one LBT subbands for MsgA payload transmissions. In another example, UEs 712 are not allowed to use a guard band for MsgA payload transmissions if the associated cell, BWP, carrier, or subband has high channel occupancy meaning that the UE 712 may only be able to grasp a single LBT subband for MsgA payload transmissions. The signaling on enabling or disabling of the feature (i.e., whether or not to use a guard band region for MsgA payload transmission) may be signaled by the gNB 702 to UEs 712 via system information, dedicated signaling, MAC CE or DCI etc.

As a seventh embodiment, a UE capability on whether to support to use a guard band region for MsgA payload transmission may be introduced.

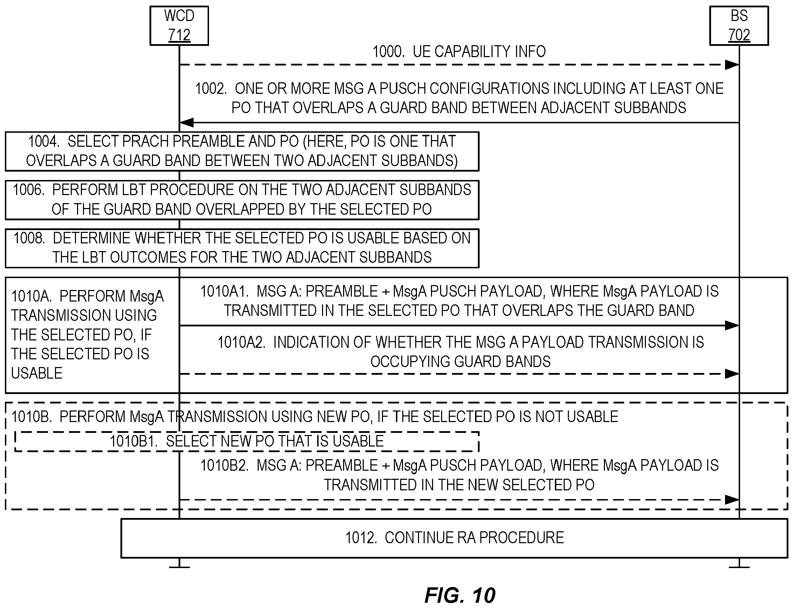

Figure 10 illustrates the operation of a WCD 712 (e.g., a UE) and a base station 702 (e.g., a gNB) in accordance with at least some aspects of at least some of the embodiments described above. Optional steps are represented by dashed lines/boxes. As illustrated, optionally, the WCD 712 sends capability information to the base station 702, where the capability information includes information that indicates that the WCD 712 supports MsgA transmission using a guard band (step 1000). The base station 702 sends, to the WCD 712, one or more MsgA PUSCH configurations (step 1000). Each MsgA PUSCH configuration includes one or more POs, where each PO defines time-frequency resources for MsgA PUSCH payload transmission. At least one of the MsgA PUSCH configurations includes a PO that at least partially overlaps a guard band between two adjacent subbands (i.e., a PO that defines time-frequency resources that at least partially overlap a guard band between two adjacent subbands).

The WCD 712 selects a PRACH preamble and PO for a MsgA transmission (step 1004). In this example, the selected PO is a PO that at least partially overlaps a particular guard band between two particular adjacent subbands. As discussed above, in some embodiments, the WCD 712 selects a PRACH preamble that is mapped to a PO that has a size that fits the desired MsgA payload. As discussed above, in some embodiments, the WCD 712 select a PO overlapping a guard band for RA considering the RA purpose or the priority order associated with the RA. The RA purpose or priority associated with the RA may be determined based on, e.g., the data that triggers the RA or the class or access category, as described above. As discussed above, in some embodiments, the selection may take into account per cell/carrier/BWP/subband configurations of whether or not to use a guard band for MsgA payload. As discussed above, in some embodiments, the selection may take into account whether using a guard band for MsgA payload is enabled or disabled, e.g., based on measured channel occupancy or LBT statistics.

The WCD 712 performs a LBT operation including LBT procedures for both of the two adjacent subbands of guard band that is overlapped by the selected PO, as discussed above (step 1006). The WCD 712 determine whether the selected PO is usable based on the outcomes of the LBT operations of the two adjacent subbands (step 1008). If the PO is usable (i.e., if there is LBT success in both of the two adjacent subbands), the WCD 712 performs the MsgA transmission using the selected PO that at least partially overlaps the guard band (step 1010). More specifically, the WCD 712 transmits the selected PRACH preamble and also transmits the MsgA PUSCH payload (step 1010A). The MsgA PUSCH payload is transmitted in the selected PO that at least partially overlaps the guard band. Optionally, the WCD 712 also sends an indication to the base station 702 that indicates that the guard band was used for the MsgA transmission.

Optionally, if the PO is not usable (i.e., if there is LBT failure in either or both of the two adjacent subbands), the WCD 712 performs the MsgA transmission using a new selected PO, e.g., a PO that does not overlap a guard band (step 1010B). More specifically, the WCD 712 selects a new PO that is usable (e.g., a PO that does not overlap any guard band) and is within a subband for which there is a LBT success (step 1010B1) and then performs the MsgA transmission using the newly selected PO (step 1010B2). The WCD 712 and the base station 702 then continue the two-step RA procedure.

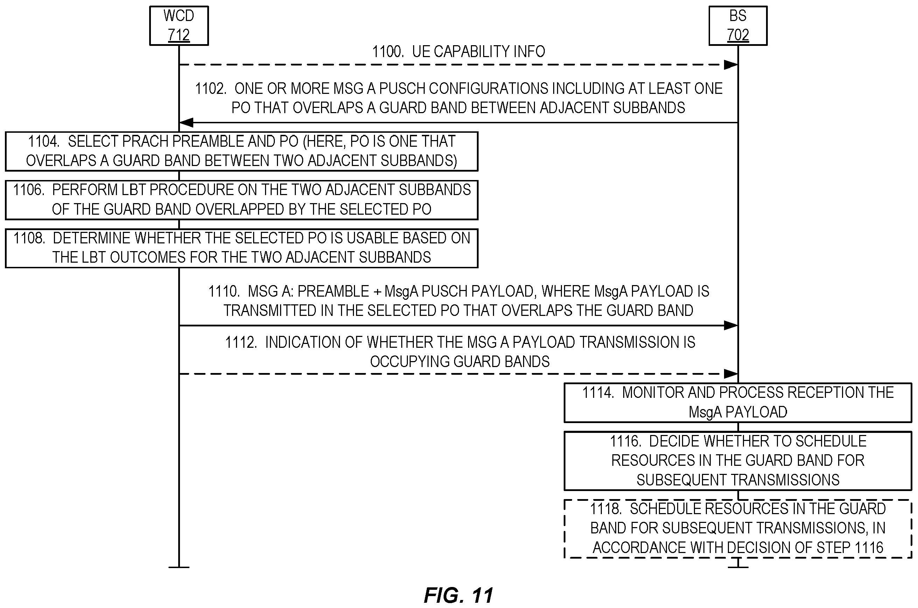

Figure 11 illustrates the operation of a WCD 712 (e.g., a UE) and a base station 702 (e.g., a gNB) in accordance with at least some aspects of at least some of the embodiments described above. Optional steps are represented by dashed lines/boxes. Note that steps 1100-1112 correspond to steps 1000-1010A2 and, as such, are not repeated. At the base station 702, the base station 702 monitors for and processes the MsgA payload transmission from the WCD 712 using the guard band and (step 1114). As discussed above, the WCD 712 decides whether the guard band can be used by the base station 702 to schedule subsequent UL and/or DL transmissions (e.g., using COT sharing) (step 1116). The base station 702 then schedules UL and/or DL transmissions in accordance with the decision in step 1116.

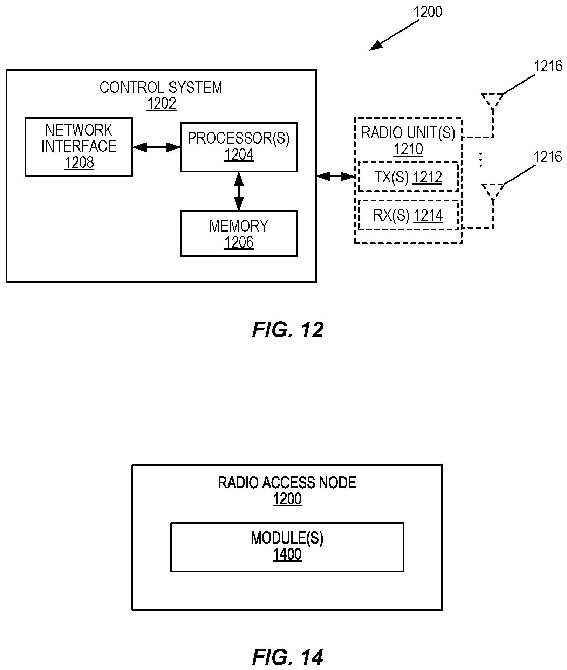

Figure 12 is a schematic block diagram of a radio access node 1200 according to some embodiments of the present disclosure. Optional features are represented by dashed boxes. The radio access node 1200 may be, for example, a base station 702 or 706 or a network node that implements all or part of the functionality of the base station 702, eNB, or gNB described herein. As illustrated, the radio access node 1200 includes a control system 1202 that includes one or more processors 1204 (e.g., Central Processing Units (CPUs), Application Specific Integrated Circuits (ASICs), Field Programmable Gate Arrays (FPGAs), and/or the like), memory 1206, and a network interface 1208. The one or more processors 1204 are also referred to herein as processing circuitry. In addition, the radio access node 1200 may include one or more radio units 1210 that each includes one or more transmitters 1212 and one or more receivers 1214 coupled to one or more antennas 1216. The radio units 1210 may be referred to or be part of radio interface circuitry. In some embodiments, the radio unit(s) 1210 is external to the control system 1202 and connected to the control system 1202 via, e.g., a wired connection (e.g., an optical cable). However, in some other embodiments, the radio unit(s) 1210 and potentially the antenna(s) 1216 are integrated together with the control system 1202. The one or more processors 1204 operate to provide one or more functions of a radio access node 1200 as described herein (e.g., one or more functions of a base station 702 or gNB as described herein, e.g., with respect to the first through seventh embodiments and Figures 10 and 11). In some embodiments, the function(s) are implemented in software that is stored, e.g., in the memory 1206 and executed by the one or more processors 1204.

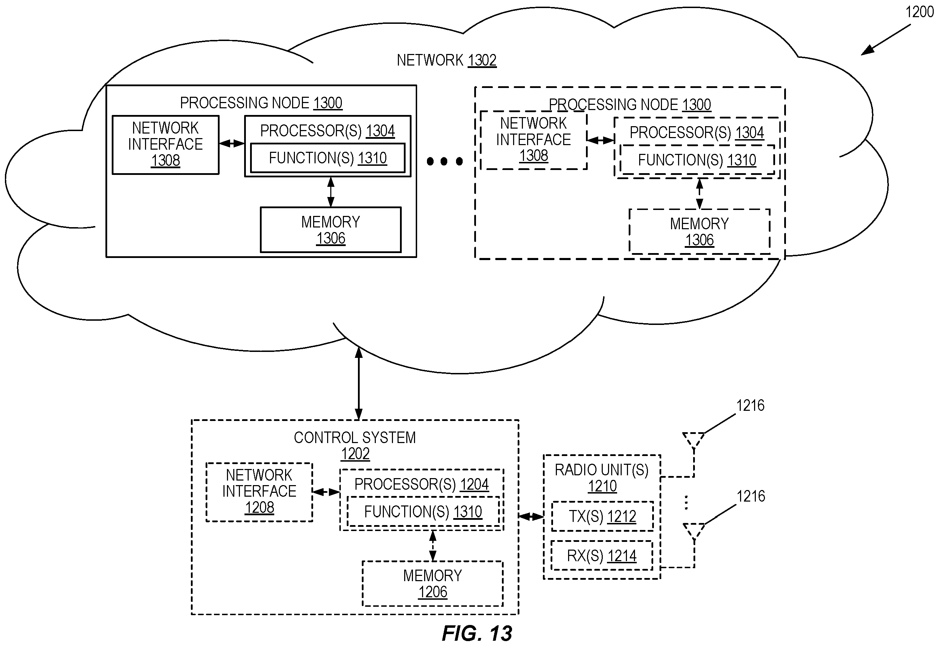

Figure 13 is a schematic block diagram that illustrates a virtualized embodiment of the radio access node 1200 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the radio access node 1200 in which at least a portion of the functionality of the radio access node 1200 is implemented as a virtual component(s) (e.g., via a virtual machine(s) executing on a physical processing node(s) in a network(s)). As illustrated, in this example, the radio access node 1200 may include the control system 1202 and/or the one or more radio units 1210, as described above. The control system 1202 may be connected to the radio unit(s) 1210 via, for example, an optical cable or the like. The radio access node 1200 includes one or more processing nodes 1300 coupled to or included as part of a network(s) 1302. If present, the control system 1202 or the radio unit(s) are connected to the processing node(s) 1300 via the network 1302. Each processing node 1300 includes one or more processors 1304 (e.g., CPUs, ASICs, FPGAs, and/or the like), memory 1306, and a network interface 1308.

In this example, functions 1310 of the radio access node 1200 described herein (e.g., one or more functions of a base station 702 or gNB as described herein, e.g., with respect to the first through seventh embodiments and Figures 10 and 11) are implemented at the one or more processing nodes 1300 or distributed across the one or more processing nodes 1300 and the control system 1202 and/or the radio unit(s) 1210 in any desired manner. In some particular embodiments, some or all of the functions 1310 of the radio access node 1200 described herein are implemented as virtual components executed by one or more virtual machines implemented in a virtual environment(s) hosted by the processing node(s) 1300. As will be appreciated by one of ordinary skill in the art, additional signaling or communication between the processing node(s) 1300 and the control system 1202 is used in order to carry out at least some of the desired functions 1310. Notably, in some embodiments, the control system 1202 may not be included, in which case the radio unit(s) 1210 communicate directly with the processing node(s) 1300 via an appropriate network interface(s).

In some embodiments, a computer program including instructions which, when executed by at least one processor, causes the at least one processor to carry out the functionality of radio access node 1200 or a node (e.g., a processing node 1300) implementing one or more of the functions 1310 of the radio access node 1200 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 14 is a schematic block diagram of the radio access node 1200 according to some other embodiments of the present disclosure. The radio access node 1200 includes one or more modules 1400, each of which is implemented in software. The module(s) 1400 provide the functionality of the radio access node 1200 described herein (e.g., one or more functions of a base station 702 or gNB as described herein, e.g., with respect to the first through seventh embodiments and Figures 10 and 11). This discussion is equally applicable to the processing node 1300 of Figure 13 where the modules 1400 may be implemented at one of the processing nodes 1300 or distributed across multiple processing nodes 1300 and/or distributed across the processing node(s) 1300 and the control system 1202.

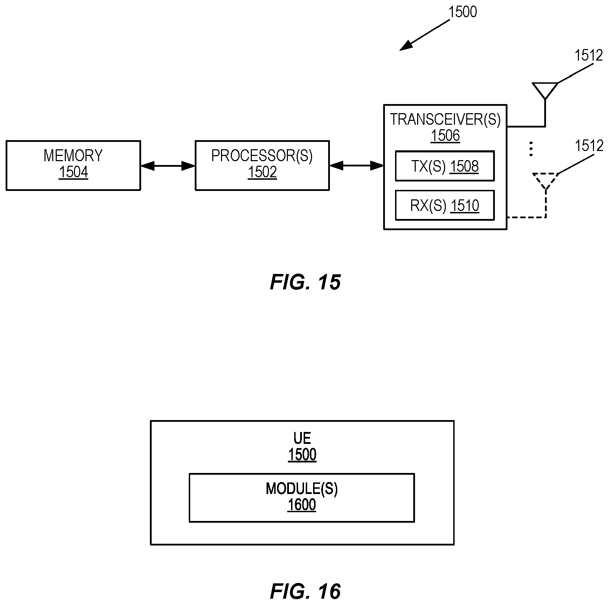

Figure 15 is a schematic block diagram of a wireless communication device 1500 according to some embodiments of the present disclosure. As illustrated, the wireless communication device 1500 includes one or more processors 1502 (e.g., CPUs, ASICs, FPGAs, and/or the like), memory 1504, and one or more transceivers 1506 each including one or more transmitters 1508 and one or more receivers 1510 coupled to one or more antennas 1512. The transceiver(s) 1506 includes radio-front end circuitry connected to the antenna(s) 1512 that is configured to condition signals communicated between the antenna(s) 1512 and the processor(s) 1502, as will be appreciated by on of ordinary skill in the art. The processors 1502 are also referred to herein as processing circuitry. The transceivers 1506 are also referred to herein as radio circuitry. In some embodiments, the functionality of the wireless communication device 1500 described above (e.g., one or more functions of a WCD 712 or UE as described herein, e.g., with respect to the first through seventh embodiments and Figures 10 and 11) may be fully or partially implemented in software that is, e.g., stored in the memory 1504 and executed by the processor(s) 1502. Note that the wireless communication device 1500 may include additional components not illustrated in Figure 15 such as, e.g., one or more user interface components (e.g., an input/output interface including a display, buttons, a touch screen, a microphone, a speaker(s), and/or the like and/or any other components for allowing input of information into the wireless communication device 1500 and/or allowing output of information from the wireless communication device 1500), a power supply (e.g., a battery and associated power circuitry), etc.

In some embodiments, a computer program including instructions which, when executed by at least one processor, causes the at least one processor to carry out the functionality of the wireless communication device 1500 according to any of the embodiments described herein (e.g., one or more functions of a WCD 712 or UE as described herein, e.g., with respect to the first through seventh embodiments and Figures 10 and 11) is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 16 is a schematic block diagram of the wireless communication device 1500 according to some other embodiments of the present disclosure. The wireless communication device 1500 includes one or more modules 1600, each of which is implemented in software. The module(s) 1600 provide the functionality of the wireless communication device 1500 described herein (e.g., one or more functions of a WCD 712 or UE as described herein, e.g., with respect to the first through seventh embodiments and Figures 10 and 11).

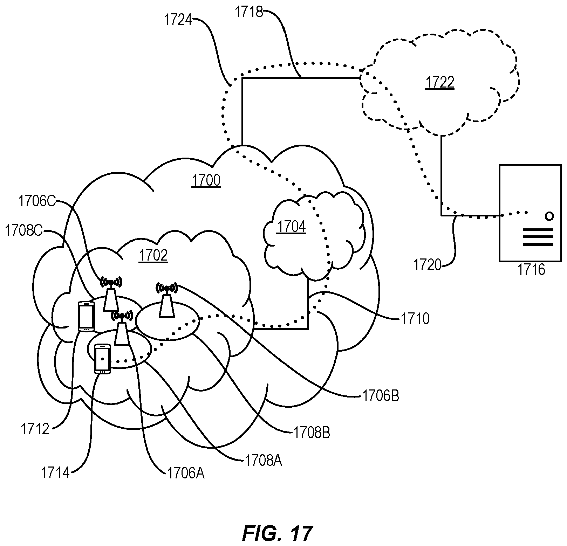

With reference to Figure 17, in accordance with an embodiment, a communication system includes a telecommunication network 1700, such as a 3GPP-type cellular network, which comprises an access network 1702, such as a RAN, and a core network 1704. The access network 1702 comprises a plurality of base stations 1706A, 1706B, 1706C, such as Node Bs, eNBs, gNBs, or other types of wireless Access Points (APs), each defining a corresponding coverage area 1708A, 1708B, 1708C. Each base station 1706A, 1706B, 1706C is connectable to the core network 1704 over a wired or wireless connection 1710. A first UE 1712 located in coverage area 1708C is configured to wirelessly connect to, or be paged by, the corresponding base station 1706C. A second UE 1714 in coverage area 1708A is wirelessly connectable to the corresponding base station 1706A. While a plurality of UEs 1712, 1714 are illustrated in this example, the disclosed embodiments are equally applicable to a situation where a sole UE is in the coverage area or where a sole UE is connecting to the corresponding base station 1706.

The telecommunication network 1700 is itself connected to a host computer 1716, which may be embodied in the hardware and/or software of a standalone server, a cloud-implemented server, a distributed server, or as processing resources in a server farm. The host computer 1716 may be under the ownership or control of a service provider, or may be operated by the service provider or on behalf of the service provider. Connections 1718 and 1720 between the telecommunication network 1700 and the host computer 1716 may extend directly from the core network 1704 to the host computer 1716 or may go via an optional intermediate network 1722. The intermediate network 1722 may be one of, or a combination of more than one of, a public, private, or hosted network; the intermediate network 1722, if any, may be a backbone network or the Internet; in particular, the intermediate network 1722 may comprise two or more sub-networks (not shown).

The communication system of Figure 17 as a whole enables connectivity between the connected UEs 1712, 1714 and the host computer 1716. The connectivity may be described as an Over-the-Top (OTT) connection 1724. The host computer 1716 and the connected UEs 1712, 1714 are configured to communicate data and/or signaling via the OTT connection 1724, using the access network 1702, the core network 1704, any intermediate network 1722, and possible further infrastructure (not shown) as intermediaries. The OTT connection 1724 may be transparent in the sense that the participating communication devices through which the OTT connection 1724 passes are unaware of routing of uplink and downlink communications. For example, the base station 1706 may not or need not be informed about the past routing of an incoming downlink communication with data originating from the host computer 1716 to be forwarded (e.g., handed over) to a connected UE 1712. Similarly, the base station 1706 need not be aware of the future routing of an outgoing uplink communication originating from the UE 1712 towards the host computer 1716.

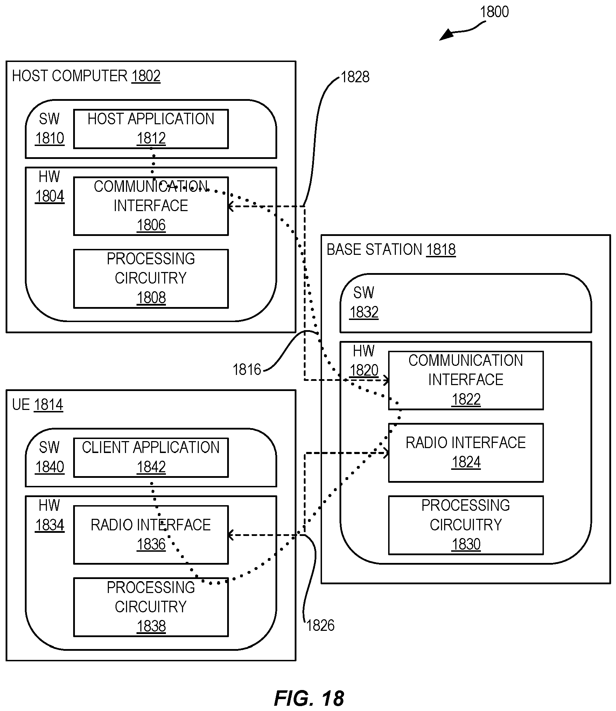

Example implementations, in accordance with an embodiment, of the UE, base station, and host computer discussed in the preceding paragraphs will now be described with reference to Figure 18. In a communication system 1800, a host computer 1802 comprises hardware 1804 including a communication interface 1806 configured to set up and maintain a wired or wireless connection with an interface of a different communication device of the communication system 1800. The host computer 1802 further comprises processing circuitry 1808, which may have storage and/or processing capabilities. In particular, the processing circuitry 1808 may comprise one or more programmable processors, ASICs, FPGAs, or combinations of these (not shown) adapted to execute instructions. The host computer 1802 further comprises software 1810, which is stored in or accessible by the host computer 1802 and executable by the processing circuitry 1808. The software 1810 includes a host application 1812. The host application 1812 may be operable to provide a service to a remote user, such as a UE 1814 connecting via an OTT connection 1816 terminating at the UE 1814 and the host computer 1802. In providing the service to the remote user, the host application 1812 may provide user data which is transmitted using the OTT connection 1816.

The communication system 1800 further includes a base station 1818 provided in a telecommunication system and comprising hardware 1820 enabling it to communicate with the host computer 1802 and with the UE 1814. The hardware 1820 may include a communication interface 1822 for setting up and maintaining a wired or wireless connection with an interface of a different communication device of the communication system 1800, as well as a radio interface 1824 for setting up and maintaining at least a wireless connection 1826 with the UE 1814 located in a coverage area (not shown in Figure 18) served by the base station 1818. The communication interface 1822 may be configured to facilitate a connection 1828 to the host computer 1802. The connection 1828 may be direct or it may pass through a core network (not shown in Figure 18) of the telecommunication system and/or through one or more intermediate networks outside the telecommunication system. In the embodiment shown, the hardware 1820 of the base station 1818 further includes processing circuitry 1830, which may comprise one or more programmable processors, ASICs, FPGAs, or combinations of these (not shown) adapted to execute instructions. The base station 1818 further has software 1832 stored internally or accessible via an external connection.

The communication system 1800 further includes the UE 1814 already referred to. The UE's 1814 hardware 1834 may include a radio interface 1836 configured to set up and maintain a wireless connection 1826 with a base station serving a coverage area in which the UE 1814 is currently located. The hardware 1834 of the UE 1814 further includes processing circuitry 1838, which may comprise one or more programmable processors, ASICs, FPGAs, or combinations of these (not shown) adapted to execute instructions. The UE 1814 further comprises software 1840, which is stored in or accessible by the UE 1814 and executable by the processing circuitry 1838. The software 1840 includes a client application 1842. The client application 1842 may be operable to provide a service to a human or non-human user via the UE 1814, with the support of the host computer 1802. In the host computer 1802, the executing host application 1812 may communicate with the executing client application 1842 via the OTT connection 1816 terminating at the UE 1814 and the host computer 1802. In providing the service to the user, the client application 1842 may receive request data from the host application 1812 and provide user data in response to the request data. The OTT connection 1816 may transfer both the request data and the user data. The client application 1842 may interact with the user to generate the user data that it provides.

It is noted that the host computer 1802, the base station 1818, and the UE 1814 illustrated in Figure 18 may be similar or identical to the host computer 1716, one of the base stations 1706A, 1706B, 1706C, and one of the UEs 1712, 1714 of Figure 17, respectively. This is to say, the inner workings of these entities may be as shown in Figure 18 and independently, the surrounding network topology may be that of Figure 17.

In Figure 18, the OTT connection 1816 has been drawn abstractly to illustrate the communication between the host computer 1802 and the UE 1814 via the base station 1818 without explicit reference to any intermediary devices and the precise routing of messages via these devices. The network infrastructure may determine the routing, which may be configured to hide from the UE 1814 or from the service provider operating the host computer 1802, or both. While the OTT connection 1816 is active, the network infrastructure may further take decisions by which it dynamically changes the routing (e.g., on the basis of load balancing consideration or reconfiguration of the network).

The wireless connection 1826 between the UE 1814 and the base station 1818 is in accordance with the teachings of the embodiments described throughout this disclosure. One or more of the various embodiments improve the performance of OTT services provided to the UE 1814 using the OTT connection 1816, in which the wireless connection 1826 forms the last segment.

A measurement procedure may be provided for the purpose of monitoring data rate, latency, and other factors on which the one or more embodiments improve. There may further be an optional network functionality for reconfiguring the OTT connection 1816 between the host computer 1802 and the UE 1814, in response to variations in the measurement results. The measurement procedure and/or the network functionality for reconfiguring the OTT connection 1816 may be implemented in the software 1810 and the hardware 1804 of the host computer 1802 or in the software 1840 and the hardware 1834 of the UE 1814, or both. In some embodiments, sensors (not shown) may be deployed in or in association with communication devices through which the OTT connection 1816 passes; the sensors may participate in the measurement procedure by supplying values of the monitored quantities exemplified above, or supplying values of other physical quantities from which the software 1810, 1840 may compute or estimate the monitored quantities. The reconfiguring of the OTT connection 1816 may include message format, retransmission settings, preferred routing, etc.; the reconfiguring need not affect the base station 1818, and it may be unknown or imperceptible to the base station 1818. Such procedures and functionalities may be known and practiced in the art. In certain embodiments, measurements may involve proprietary UE signaling facilitating the host computer 1802's measurements of throughput, propagation times, latency, and the like. The measurements may be implemented in that the software 1810 and 1840 causes messages to be transmitted, in particular empty or 'dummy' messages, using the OTT connection 1816 while it monitors propagation times, errors, etc.

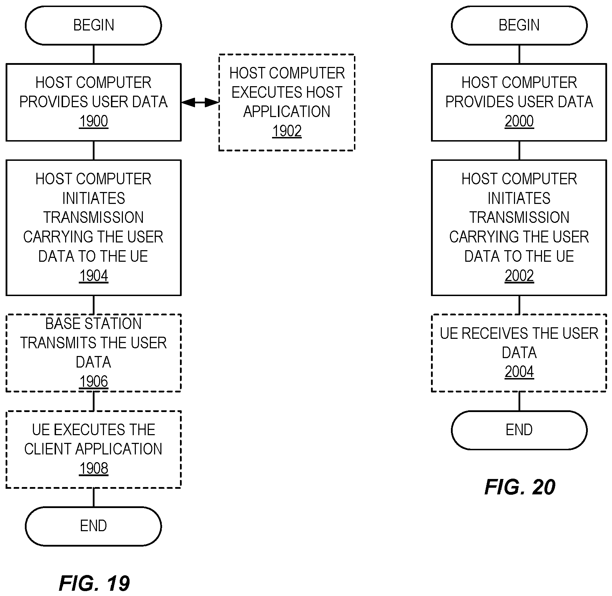

Figure 19 is a flowchart illustrating a method implemented in a communication system, in accordance with one embodiment. The communication system includes a host computer, a base station, and a UE which may be those described with reference to Figures 17 and 18. For simplicity of the present disclosure, only drawing references to Figure 19 will be included in this section. In step 1900, the host computer provides user data. In sub-step 1902 (which may be optional) of step 1900, the host computer provides the user data by executing a host application. In step 1904, the host computer initiates a transmission carrying the user data to the UE. In step 1906 (which may be optional), the base station transmits to the UE the user data which was carried in the transmission that the host computer initiated, in accordance with the teachings of the embodiments described throughout this disclosure. In step 1908 (which may also be optional), the UE executes a client application associated with the host application executed by the host computer.

Figure 20 is a flowchart illustrating a method implemented in a communication system, in accordance with one embodiment. The communication system includes a host computer, a base station, and a UE which may be those described with reference to Figures 17 and 18. For simplicity of the present disclosure, only drawing references to Figure 20 will be included in this section. In step 2000 of the method, the host computer provides user data. In an optional sub-step (not shown) the host computer provides the user data by executing a host application. In step 2002, the host computer initiates a transmission carrying the user data to the UE. The transmission may pass via the base station, in accordance with the teachings of the embodiments described throughout this disclosure. In step 2004 (which may be optional), the UE receives the user data carried in the transmission.

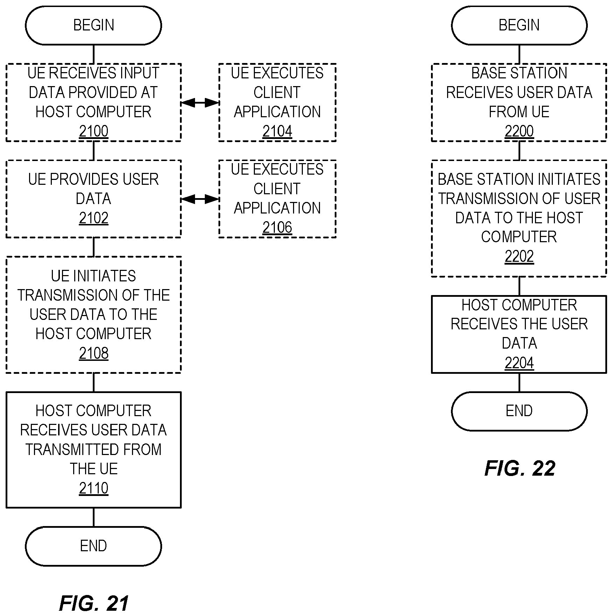

Figure 21 is a flowchart illustrating a method implemented in a communication system, in accordance with one embodiment. The communication system includes a host computer, a base station, and a UE which may be those described with reference to Figures 17 and 18. For simplicity of the present disclosure, only drawing references to Figure 21 will be included in this section. In step 2100 (which may be optional), the UE receives input data provided by the host computer. Additionally or alternatively, in step 2102, the UE provides user data. In sub-step 2104 (which may be optional) of step 2100, the UE provides the user data by executing a client application. In sub-step 2106 (which may be optional) of step 2102, the UE executes a client application which provides the user data in reaction to the received input data provided by the host computer. In providing the user data, the executed client application may further consider user input received from the user. Regardless of the specific manner in which the user data was provided, the UE initiates, in sub-step 2108 (which may be optional), transmission of the user data to the host computer. In step 2110 of the method, the host computer receives the user data transmitted from the UE, in accordance with the teachings of the embodiments described throughout this disclosure.

Figure 22 is a flowchart illustrating a method implemented in a communication system, in accordance with one embodiment. The communication system includes a host computer, a base station, and a UE which may be those described with reference to Figures 17 and 18. For simplicity of the present disclosure, only drawing references to Figure 22 will be included in this section. In step 2200 (which may be optional), in accordance with the teachings of the embodiments described throughout this disclosure, the base station receives user data from the UE. In step 2202 (which may be optional), the base station initiates transmission of the received user data to the host computer. In step 2204 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

- 3GPP     Third Generation Partnership Project
- 5G     Fifth Generation
- 5GC     Fifth Generation Core
- 5GS     Fifth Generation System
- AF     Application Function
- AMF     Access and Mobility Function
- AN     Access Network
- AP     Access Point
- ASIC     Application Specific Integrated Circuit
- AUSF     Authentication Server Function
- CPU     Central Processing Unit
- DN     Data Network
- DSP     Digital Signal Processor
- eNB     Enhanced or Evolved Node B
- EPS     Evolved Packet System
- E-UTRA     Evolved Universal Terrestrial Radio Access
- FPGA     Field Programmable Gate Array
- gNB     New Radio Base Station
- gNB-DU     New Radio Base Station Distributed Unit
- HSS     Home Subscriber Server
- IoT     Internet of Things
- IP     Internet Protocol
- LTE     Long Term Evolution
- MME     Mobility Management Entity
- MTC     Machine Type Communication
- NEF     Network Exposure Function
- NF     Network Function
- NR     New Radio
- NRF     Network Function Repository Function
- NSSF     Network Slice Selection Function
- OTT     Over-the-Top
- PC     Personal Computer
- PCF     Policy Control Function
- P-GW     Packet Data Network Gateway
- QoS     Quality of Service
- RAM     Random Access Memory
- RAN     Radio Access Network
- ROM     Read Only Memory
- RRH     Remote Radio Head
- RTT     Round Trip Time
- SCEF     Service Capability Exposure Function
- SMF     Session Management Function
- UDM     Unified Data Management
- UE     User Equipment
- UPF     User Plane Function

**Claims**

1. A method performed by a wireless communication device (712), the method comprising:

    obtaining (1002) one or more MsgA Physical Uplink Shared Channel, PUSCH, configurations for two-step random access, the one or more MsgA PUSCH configurations comprising a MsgA PUSCH configuration that comprises a PUSCH occasion, PO, for two-step random access that at least partially overlaps a guard band between two adjacent subbands;

selecting (1004) the PO that at least partially overlaps the guard band between the two adjacent subbands for a MsgA transmission for a two-step random access procedure;

determining (1006-1008) that the MsgA transmission using the selected PO that at least partially overlaps the guard band between the two adjacent subbands is allowable; and

upon determining (1008) that the MsgA transmission using the selected PO is allowable, performing (1010A) the MsgA transmission for the two-step random access procedure, the MsgA transmission comprising a MsgA PUSCH payload transmitted in the PO that at least partially overlaps the guard band.

2. The method of claim 1, wherein determining (1006-1008) that the MsgA transmission using the selected PO that at least partially overlaps the guard band between the two adjacent subbands is allowable comprises:

performing (1006) Listen Before Talk, LBT, procedures for the two adjacent subbands; and
determining (1008) that the MsgA transmission using the selected PO is allowable based on the LBT procedures for the two adjacent subbands.

3. The method of claim 1 or 2, wherein the MsgA PUSCH configuration that comprises the PO that at least partially overlaps the guard band comprises:

a) information that indicates that the PO at least partially overlaps the guard band;
b) information that indicates a location of the guard band that is at least partially overlapped by the PO;
c) information that indicates a size of the guard band that is at least partially overlapped by the PO;
d) information about the two adjacent subbands of the guard band that is at least partially overlapped by the PO; or
e) any two or more of (a)-(d).

4. The method of any of claims 1 to 2, wherein selecting (1004) the PO that at least partially overlaps the guard band between the two adjacent subbands for a MsgA transmission comprises selecting (1004) the PO that at least partially overlaps the guard band between the two adjacent subbands for the MsgA transmission based on:

a) a preamble selected for the MsgA transmission, a size of the MsgA PUSCH payload for the MsgA transmission, or both the preamble and the size of the MsgA PUSCH payload; and/or
b) a purpose of the random access; and/or
c) a priority order or priority level associated with the random access; and/or
d) whether or not MsgA payload transmission is permitted in a guard band for a respective cell, carrier, bandwidth part, or subband; or whether or not MsgA payload transmission in a guard band is enabled.

5. The method of any of claims 1 to 4, further comprising sending (1000), to the base station (702), capability information comprising information that indicates that the wireless communication device (712) is capable of performing MsgA payload transmissions in a guard band.

6. The method of any of claims 1 to 5, further comprising sending (1010A2), to the base station (702), an indication that the MsgA transmission uses the guard band; and, optionally, wherein

a) the indication is an implicit indication provided by the PO in which the MsgA preamble is transmitted; or
b) sending (1010A2) the indication comprises:

sending the indication in Uplink Control Information, UCI;
sending the indication via signaling;
sending the indication in a Medium Access Control, MAC, Control Element, CE; or
sending the indication in a MAC subheader; and/or
the indication is comprised in the MsgA payload, in a Medium Access Control, MAC, Control Element, CE, comprised in the MsgA payload, or in a MAC subheader comprised in the MsgA payload.

7. A wireless communication device (712) adapted to:

obtain (1002) one or more MsgA Physical Uplink Shared Channel, PUSCH, configurations comprising a MsgA PUSCH configuration that comprises a PUSCH occasion, PO, that at least partially overlaps a guard band between two adjacent subbands;

select (1004) the PO that at least partially overlaps the guard band between the two adjacent subbands for a MsgA transmission;

determine (1006-1008) that the MsgA transmission using the selected PO that at least partially overlaps the guard band between the two adjacent subbands is allowable; and

upon determining (1008) that the MsgA transmission using the selected PO is allowable, perform (1010A) the MsgA transmission, the MsgA transmission comprising a MsgA PUSCH payload transmitted in the PO that at least partially overlaps the guard band.

8. The wireless communication device (712) of claim 7, wherein the wireless communication device (712) is further adapted to perform the method of any of claims 2 to 6.

9. A method performed by a base station (702) of a cellular communications system (700), the method comprising:

providing (1002; 1102), to a wireless communication device (712), one or more MsgA PUSCH configurations comprising a MsgA PUSCH configuration that comprises a PUSCH occasion, PO, that at least partially overlaps a guard band between two adjacent subbands; and

receiving (1010A; 1010A1; 1110), from the wireless communication device (712), a MsgA transmission, the MsgA transmission comprising a MsgA PUSCH payload transmitted in a PO that at least partially overlaps a guard band between two adjacent subbands.

10. The method of claim 9, further comprising receiving (1010A2; 1112-1114), from the wireless communication device (712), an indication that the MsgA transmission uses the guard band; and/or

wherein the MsgA PUSCH configuration comprises one or more of the following:

a) information that indicates that the PO at least partially overlaps the guard band;
b) information that indicates a location of the guard band that is at least partially overlapped by the PO;
c) information that indicates a size of the guard band that is at least partially overlapped by the PO;
d) information about the two adjacent subbands of the guard band that is at least partially overlapped by the PO; or
e) any two or more of (a)-(d).

11. The method of claim 9 or 10, wherein the guard band and the two adjacent subbands are in unlicensed spectrum, and the method further comprises determining (1116) that subsequent transmissions can be scheduled in the guard band using channel occupancy time sharing and scheduling (1118) one or more subsequent transmissions using resources that at least partially overlap the guard band based on the determining (1116); and/or

further comprising receiving (1100), from the wireless communication device (712), capability information comprising information that indicates that the wireless communication device (712) is capable of performing MsgA payload transmissions in a guard band.

12. The method of any of claims 9 to 11, further comprising sending, to the wireless communication device, information that configures whether MsgA payload transmissions in a guard band are permitted; and/or.

further comprising sending, to the wireless communication device, information that configures whether MsgA payload transmissions are permitted in a guard band per carrier, per cell, per bandwidth part, or per subband.

13. The method of any of claims 9 to 12, further comprising sending, to the wireless communication device, information that enables MsgA payload transmissions in a guard band; and, optionally,

further comprising deciding to enable MsgA payload transmissions in a guard band based on cell load or LBT statistics.

14. A base station (702) for a cellular communications system (700), the base station (702) adapted to:

provide (1002; 1102), to a wireless communication device (712), one or more MsgA PUSCH configurations comprising a MsgA PUSCH configuration that comprises a PUSCH occasion, PO, that at least partially overlaps a guard band between two adjacent subbands; and

receive (1010A; 1010A1; 1110), from the wireless communication device (712), a MsgA transmission, the MsgA transmission comprising a MsgA PUSCH payload transmitted in a PO that at least partially overlaps a guard band between two adjacent subbands.

**15.** The base station (702) of claim 14 wherein the base station (702) is further adapted to perform the method of any of claims 9 to 13.

**Patentansprüche**

**1.** Verfahren, das durch eine drahtlose Kommunikationsvorrichtung (712) durchgeführt wird, wobei das Verfahren Folgendes umfasst:

Erhalten (1002) einer oder mehrerer MsgA-Physical-Uplink-Shared-Channel-Konfigurationen, MsgA-PUSCH-Konfigurationen, für einen zweistufigen Direktzugriff, wobei die eine oder mehreren MsgA-PUSCH-Konfigurationen eine MsgA-PUSCH-Konfiguration umfassen, die ein PUSCH-Ereignis, PO, für einen zweistufigen Direktzugriff umfasst, das sich mindestens teilweise mit einem Schutzband zwischen zwei benachbarten Teilbändern überschneidet;
Auswählen (1004) des PO, das sich mindestens teilweise mit dem Schutzband zwischen den zwei benachbarten Teilbändern überschneidet, für eine MsgA-Übertragung für einen zweistufigen Direktzugriffsvorgang;
Bestimmen (1006-1008), dass die MsgA-Übertragung unter Verwendung des ausgewählten PO, das sich mindestens teilweise mit dem Schutzband zwischen den zwei benachbarten Teilbändern überschneidet, zulässig ist; und
bei Bestimmen (1008), dass die MsgA-Übertragung unter Verwendung des ausgewählten PO zulässig ist, Durchführen (1010A) der MsgA-Übertragung für den zweistufigen Direktzugriffsvorgang, wobei die MsgA-Übertragung MsgA-PUSCH-Nutzdaten umfasst, die in dem PO übertragen werden, das sich mindestens teilweise mit dem Schutzband überschneidet.

**2.** Verfahren nach Anspruch 1, wobei das Bestimmen (1006-1008), dass die MsgA-Übertragung unter Verwendung des ausgewählten PO, das sich mindestens teilweise mit dem Schutzband zwischen den zwei benachbarten Teilbändern überschneidet, zulässig ist, Folgendes umfasst:

Durchführen (1006) von Listen-Before-Talk-Vorgängen, LBT-Vorgängen, für die zwei benachbarten Teilbänder; und
Bestimmen (1008), dass die MsgA-Übertragung unter Verwendung des ausgewählten PO zulässig ist, auf Grundlage der LBT-Vorgänge für die zwei benachbarten Teilbänder.

**3.** Verfahren nach Anspruch 1 oder 2, wobei die MsgA-PUSCH-Konfiguration, die das PO umfasst, das sich mindestens teilweise mit dem Schutzband überschneidet, Folgendes umfasst:

a) Informationen, die angeben, dass das PO sich mindestens teilweise mit dem Schutzband überschneidet;
b) Informationen, die eine Lage des Schutzbands angeben, mit dem sich das PO mindestens teilweise überschneidet;
c) Informationen, die eine Größe des Schutzbands angeben, mit dem sich das PO mindestens teilweise überschneidet;
d) Informationen über die zwei benachbarten Teilbänder des Schutzbands, mit dem sich das PO mindestens teilweise überschneidet; oder
e) beliebige zwei oder mehr von (a)-(d).

**4.** Verfahren nach einem der Ansprüche 1 bis 2, wobei das Auswählen (1004) des PO, das sich mindestens teilweise mit dem Schutzband zwischen den zwei benachbarten Teilbändern überschneidet, für eine MsgA-Übertragung Auswählen (1004) des PO, das sich mindestens teilweise mit dem Schutzband zwischen den zwei benachbarten Teilbändern überschneidet, für die MsgA-Übertragung auf Grundlage von Folgendem umfasst:

a) einem Oberbegriff, der für die MsgA-Übertragung ausgewählt ist, einer Größe der MsgA-PUSCH-Nutzdaten für die MsgA-Übertragung oder sowohl dem Oberbegriff als auch der Größe der MsgA-PUSCH-Nutzdaten; und/oder
b) einem Zweck des Direktzugriffs; und/oder
c) einer Prioritätsreihenfolge oder einer Prioritätsebene, die dem Direktzugriff zugeordnet ist; und/oder
d) ob die MsgA-Nutzdatenübertragung in einem Schutzband für eine jeweilige Zelle, einen jeweiligen Träger, einen jeweiligen Teil einer Bandbreite oder ein Teilband zulässig ist oder nicht; oder

ob die MsgA-Nutzdatenübertragung in einem Schutzband aktiviert ist oder nicht.

5. Verfahren nach einem der Ansprüche 1 bis 4, ferner umfassend Senden (1000) von Fähigkeitsinformationen, die Informationen umfassen, die angeben, dass die drahtlose Kommunikationsvorrichtung (712) dazu fähig ist, MsgA-Nutzdatenübertragungen in einem Schutzband durchzuführen, an die Basisstation (702) umfasst.

6. Verfahren nach einem der Ansprüche 1 bis 5, ferner umfassend Senden (1010A2) einer Angabe, dass die MsgA-Übertragung das Schutzband verwendet, an die Basisstation (702); und wobei gegebenenfalls

   a) die Angabe eine implizite Angabe ist, die durch das PO bereitgestellt wird und in welcher der MsgA-Oberbegriff übertragen wird; oder
   b) das Senden (1010A2) der Angabe Folgendes umfasst:

   Senden der Angabe in Uplink-Steuerinformationen, UCI;
   Senden der Angabe über eine Signalgebung;
   Senden der Angabe in einem Medium-Access-Control-Steuerelement, MAC-CE; oder
   Senden der Angabe in einem MAC-Subheader; und/oder
   die Angabe in den MsgA-Nutzdaten, die in einem Medium-Access-Control-Steuerelement, MAC-CE, das in den MsgA-Nutzdaten enthalten ist, oder in einem MAC-Subheader enthalten ist, der in den MsgA-Nutzdaten enthalten ist.

7. Drahtlose Kommunikationsvorrichtung (712), die zu Folgendem angepasst ist:

   Erhalten (1002) einer oder mehrerer MsgA-Physical-Uplink-Shared-Channel-Konfigurationen, MsgA-PUSCH-Konfigurationen, die eine MsgA-PUSCH-Konfiguration umfassen, die ein PUSCH-Ereignis, PO, umfasst, das sich mindestens teilweise mit einem Schutzband zwischen zwei benachbarten Teilbändern überschneidet;
   Auswählen (1004) des PO, das sich mindestens teilweise mit dem Schutzband zwischen den zwei benachbarten Teilbändern überschneidet, für eine MsgA-Übertragung;
   Bestimmen (1006-1008), dass die MsgA-Übertragung unter Verwendung des ausgewählten PO, das sich mindestens teilweise mit dem Schutzband zwischen den zwei benachbarten Teilbändern überschneidet, zulässig ist; und
   bei Bestimmen (1008), dass die MsgA-Übertragung unter Verwendung des ausgewählten PO zulässig ist, Durchführen (1010A) der MsgA-Übertragung, wobei die MsgA-Übertragung MsgA-PUSCH-Nutzdaten umfasst, die in dem PO übertragen werden, das sich mindestens teilweise mit dem Schutzband überschneidet.

8. Drahtlose Kommunikationsvorrichtung (712) nach Anspruch 7, wobei die drahtlose Kommunikationsvorrichtung (712) ferner dazu angepasst ist, das Verfahren nach einem der Ansprüche 2 bis 6 durchzuführen.

9. Verfahren, das durch eine Basisstation (702) eines Mobilfunkkommunikationssystems (700) durchgeführt wird, wobei das Verfahren Folgendes umfasst:

   Bereitstellen (1002; 1102) einer oder mehrerer MsgA-PUSCH-Konfigurationen, die eine MsgA-PUSCH-Konfiguration umfassen, die ein PUSCH-Ereignis, PO, umfasst, das sich mindestens teilweise mit einem Schutzband zwischen zwei benachbarten Teilbändern überschneidet, an eine drahtlose Kommunikationsvorrichtung (712); und
   Empfangen (1010A; 1010A1; 1110) einer MsgA-Übertragung von der drahtlosen Kommunikationsvorrichtung (712), wobei die MsgA-Übertragung MsgA-PUSCH-Nutzdaten umfasst, die in einem PO übertragen werden, das sich mindestens teilweise mit einem Schutzband zwischen zwei benachbarten Teilbändern überschneidet.

10. Verfahren nach Anspruch 9, ferner umfassend Empfangen (1010A2; 1112-1114) einer Angabe, dass die MsgA-Übertragung das Schutzband verwendet, von der drahtlosen Kommunikationsvorrichtung (712); und/oder wobei die MsgA-PUSCH-Konfiguration eines oder mehrere der Folgenden umfasst:

   a) Informationen, die angeben, dass das PO sich mindestens teilweise mit dem Schutzband überschneidet;
   b) Informationen, die eine Lage des Schutzbands angeben, mit dem sich das PO mindestens teilweise überschneidet;
   c) Informationen, die eine Größe des Schutzbands angeben, mit dem sich das PO mindestens teilweise überschneidet;

d) Informationen über die zwei benachbarten Teilbänder des Schutzbands, mit dem sich das PO mindestens teilweise überschneidet; oder
e) beliebige zwei oder mehr von (a)-(d).

**11.** Verfahren nach Anspruch 9 oder 10, wobei sich das Schutzband und die zwei benachbarten Teilbänder in einem unlizenzierten Spektrum befinden und das Verfahren ferner Folgendes umfasst: Bestimmen (1116), dass nachfolgende Übertragungen in dem Schutzband unter Verwendung von Kanalbelegungszeitaufteilung geplant werden können, und Planen (1118) einer oder mehrerer nachfolgender Übertragungen unter Verwendung von Ressourcen, die sich mindestens teilweise mit dem Schutzband überschneiden, auf Grundlage des Bestimmens (1116); und/oder ferner umfassend Empfangen (1100) von Fähigkeitsinformationen, die Informationen umfassen, die angeben, dass die drahtlose Kommunikationsvorrichtung (712) dazu fähig ist, MsgA-Nutzdatenübertragungen in einem Schutzband durchzuführen, von der drahtlosen Kommunikationsvorrichtung (712) .

**12.** Verfahren nach einem der Ansprüche 9 bis 11, ferner umfassend Senden von Informationen, die konfigurieren, ob MsgA-Nutzdatenübertragungen in einem Schutzband zulässig sind, an die drahtlose Kommunikationsvorrichtung; und/oder
ferner umfassend Senden von Informationen, die konfigurieren, ob MsgA-Nutzdatenübertragungen in einem Schutzband pro Träger, pro Zelle, pro Teil einer Bandbreite oder pro Teilband zulässig sind, an die drahtlose Kommunikationsvorrichtung.

**13.** Verfahren nach einem der Ansprüche 9 bis 12, ferner umfassend Senden von Informationen, welche die MsgA-Nutzdatenübertragungen in einem Schutzband aktivieren, an die drahtlose Kommunikationsvorrichtung; und gegebenenfalls
ferner umfassend Entscheiden, MsgA-Nutzdatenübertragungen in einem Schutzband auf Grundlage einer Zelllast oder von LBT-Statistiken zu aktivieren.

**14.** Basisstation (702) für ein Mobilfunkkommunikationssystem (700), wobei die Basisstation (702) zu Folgendem angepasst ist:

Bereitstellen (1002; 1102) einer oder mehrerer MsgA-PUSCH-Konfigurationen, die eine MsgA-PUSCH-Konfiguration umfassen, die ein PUSCH-Ereignis, PO, umfasst, das sich mindestens teilweise mit einem Schutzband zwischen zwei benachbarten Teilbändern überschneidet, an eine drahtlose Kommunikationsvorrichtung (712); und

Empfangen (1010A; 1010A1; 1110) einer MsgA-Übertragung von der drahtlosen Kommunikationsvorrichtung (712), wobei die MsgA-Übertragung MsgA-PUSCH-Nutzdaten umfasst, die in einem PO übertragen werden, das sich mindestens teilweise mit einem Schutzband zwischen zwei benachbarten Teilbändern überschneidet.

**15.** Basisstation (702) nach Anspruch 14, wobei die Basisstation (702) ferner dazu angepasst ist, das Verfahren nach einem der Ansprüche 9 bis 13 durchzuführen.

## Revendications

**1.** Procédé réalisé par un dispositif de communication sans fil (712), le procédé comprenant :

l'obtention (1002) d'une ou plusieurs configurations de canal physique partagé de liaison montante (PUSCH) de MsgA pour un accès aléatoire en deux étapes, l'une ou les plusieurs configurations PUSCH de MsgA comprenant une configuration PUSCH de MsgA qui comprend une occasion PUSCH (PO) pour un accès aléatoire en deux étapes qui chevauche au moins partiellement une bande de garde entre deux sous-bandes adjacentes ;
la sélection (1004) du PO qui chevauche au moins partiellement la bande de garde entre les deux sous-bandes adjacentes pour une transmission MsgA pour une procédure d'accès aléatoire en deux étapes ;
la détermination (1006-1008) que la transmission MsgA utilisant le PO sélectionné qui chevauche au moins partiellement la bande de garde entre les deux sous-bandes adjacentes est autorisée ; et après avoir déterminé (1008) que la transmission MsgA utilisant le PO sélectionné est autorisée, la réalisation (1010A) de la transmission MsgA pour la procédure d'accès aléatoire en deux étapes, la transmission MsgA comprenant une charge utile PUSCH de MsgA transmise dans le PO qui chevauche au moins partiellement la bande de garde.

**2.** Procédé selon la revendication 1, dans lequel la détermination (1006-1008) que la transmission MsgA utilisant le PO sélectionné qui chevauche au moins partiellement la bande de garde entre les deux sous-bandes adjacentes est autorisée comprend :

la réalisation (1006) des procédures « Écouter avant de parler » (LBT) pour les deux sous-bandes adjacentes ; et la détermination (1008) que la transmission MsgA utilisant le PO sélectionné est autorisée sur la base des procédures LBT pour les deux sous-bandes adjacentes.

**3.** Procédé selon la revendication 1 ou 2, dans lequel la configuration PUSCH de MsgA qui comprend le PO qui chevauche au moins partiellement la bande de garde comprend :

a) des informations qui indiquent que le PO chevauche au moins partiellement la bande de garde ;
b) des informations qui indiquent un emplacement de la bande de garde qui est au moins partiellement recouvert par le PO ;
c) des informations qui indiquent une taille de la bande de garde qui est au moins partiellement recouverte par le PO ;
d) des informations sur les deux sous-bandes adjacentes de la bande de garde qui sont au moins partiellement recouvertes par le PO ; ou
e) l'une quelconque deux ou plusieurs parmi (a)-(d).

**4.** Procédé selon l'une quelconque des revendications 1 à 2, dans lequel la sélection (1004) du PO qui chevauche au moins partiellement la bande de garde entre les deux sous-bandes adjacentes pour une transmission MsgA comprend la sélection (1004) du PO qui chevauche au moins partiellement la bande de garde entre les deux sous-bandes adjacentes pour la transmission MsgA sur la base :

a) d'un préambule sélectionné pour la transmission MsgA, une taille PUSCH de MsgA
la charge utile pour la transmission MsgA, ou à la fois le préambule et la taille de la charge utile PUSCH de MsgA ; et/ou
b) d'un but de l'accès aléatoire ; et/ou
c) d'un ordre de priorité ou niveau de priorité associé à l'accès aléatoire ; et/ou
d) du fait de savoir si oui ou non la transmission de charge utile MsgA est autorisée dans une bande de garde pour une cellule, une porteuse, une partie de largeur de bande ou une sous-bande respective ; ou si la transmission de charge utile MsgA dans une bande de garde est activée ou non.

**5.** Procédé selon l'une quelconque des revendications 1 à 4, comprenant également l'envoi (1000), à la station de base (702), d'informations de capacité comprenant des informations qui indiquent que le dispositif de communication sans fil (712) est capable de réaliser des transmissions de charge utile MsgA dans une bande de garde.

**6.** Procédé selon l'une quelconque des revendications 1 à 5, comprenant également l'envoi (1010A2), à la station de base (702), d'une indication que la transmission MsgA utilise la bande de garde ; et, éventuellement, dans lequel

a) l'indication est une indication implicite fournie par le PO dans lequel le préambule MsgA est transmis ; ou
b) l'envoi (1010A2) de l'indication comprend :

l'envoi de l'indication dans les informations de commande de liaison montante (UCI) ;
l'envoi de l'indication par le biais de la signalisation ;
l'envoi de l'indication dans un contrôle d'accès au support (MAC), un élément de commande (CE) ; ou
l'envoi de l'indication dans un sous-en-tête MAC ; et/ou
l'indication est comprise dans la charge utile MsgA, dans un contrôle d'accès au support (MAC), un élément de commande (CE), compris dans la charge utile MsgA, ou dans un sous-en-tête MAC compris dans la charge utile MsgA.

**7.** Dispositif de communication sans fil (712) adapté pour : obtenir (1002) une ou plusieurs configurations de canal partagé de liaison montante physique MsgA (PUSCH) comprenant une configuration PUSCH de MsgA qui comprend une occasion PUSCH (PO) qui chevauche au moins partiellement une bande de garde entre deux sous-bandes adjacentes ;

sélectionner (1004) le PO qui chevauche au moins partiellement la bande de garde entre les deux sous-bandes adjacentes pour une transmission MsgA ;

déterminer (1006-1008) que la transmission MsgA utilisant le PO sélectionné qui chevauche au moins partiellement la bande de garde entre les deux sous-bandes adjacentes est autorisée ; et

après la détermination (1008) que la transmission MsgA utilisant le PO sélectionné est autorisée, réaliser (1010A) la transmission MsgA, la transmission MsgA comprenant une charge utile PUSCH de MsgA transmise dans le PO qui chevauche au moins partiellement la bande de garde.

**8.** Dispositif de communication sans fil (712) selon la revendication 7, dans lequel le dispositif de communication sans fil (712) est également adapté pour réaliser le procédé selon l'une quelconque des revendications 2 à 6.

**9.** Procédé réalisé par une station de base (702) d'un système de communication cellulaire (700), le procédé comprenant :

la fourniture (1002 ; 1102), à un dispositif de communication sans fil (712), d'une ou plusieurs configurations PUSCH de MsgA comprenant une configuration PUSCH de MsgA qui comprend une occasion PUSCH (PO) qui chevauche au moins partiellement une bande de garde entre deux sous-bandes adjacentes ; et

la réception (1010A ; 1010A1 ; 1110), depuis le dispositif de communication sans fil (712), d'une transmission MsgA, la transmission MsgA comprenant une charge utile PUSCH de MsgA transmise dans un PO qui chevauche au moins partiellement une bande de garde entre deux sous-bandes adjacentes.

**10.** Procédé selon la revendication 9, comprenant également la réception (1010A2 ; 1112-1114), depuis le dispositif de communication sans fil (712), d'une indication que la transmission MsgA utilise la bande de garde ; et/ou dans lequel la configuration PUSCH de MsgA comprend un ou plusieurs parmi :

a) des informations qui indiquent que le PO chevauche au moins partiellement la bande de garde ;

des informations qui indiquent un emplacement de la bande de garde qui est au moins partiellement recouvert par le PO ;

c) des informations qui indiquent une taille de la bande de garde qui est au moins partiellement recouverte par le PO ;

d) des informations sur les deux sous-bandes adjacentes de la bande de garde qui sont au moins partiellement recouvertes par le PO ; ou

e) l'une quelconque deux ou plusieurs parmi (a)-(d).

**11.** Procédé selon la revendication 9 ou 10, dans lequel la bande de garde et les deux sous-bandes adjacentes sont dans un spectre sans licence, et le procédé comprend également la détermination (1116) que des transmissions ultérieures peuvent être programmées dans la bande de garde à l'aide du partage de temps d'occupation de canal et la programmation (1118) d'une ou plusieurs transmissions ultérieures utilisant des ressources qui chevauchent au moins partiellement la bande de garde sur la base de la détermination (1116) ; et/ou

comprenant également la réception (1100), depuis le dispositif de communication sans fil (712), d'informations de capacité comprenant des informations qui indiquent que le dispositif de communication sans fil (712) est capable de réaliser des transmissions de charge utile MsgA dans une bande de garde.

**12.** Procédé selon l'une quelconque des revendications 9 à 11, comprenant également l'envoi, au dispositif de communication sans fil, d'informations qui configurent si les transmissions de charge utile MsgA dans une bande de garde sont autorisées ; et/ou

comprenant également l'envoi, au dispositif de communication sans fil, d'informations qui configurent si les transmissions de charge utile MsgA sont autorisées dans une bande de garde par porteuse, par cellule, par partie de bande passante ou par sous-bande.

**13.** Procédé selon l'une quelconque des revendications 9 à 12, comprenant également l'envoi, au dispositif de communication sans fil, d'informations qui permettent des transmissions de charge utile MsgA dans une bande de garde ; et, éventuellement,

comprenant également la décision d'activer les transmissions de charge utile MsgA dans une bande de garde sur la base de la charge de cellule ou des statistiques LBT.

**14.** Station de base (702) pour un système de communication cellulaire (700), la station de base (702) adaptée pour :

fournir (1002 ; 1102), à un dispositif de communication sans fil (712), une ou plusieurs configurations PUSCH de MsgA comprenant une configuration PUSCH de MsgA qui comprend une occasion PUSCH (PO) qui chevauche au moins partiellement une bande de garde entre deux sous-bandes adjacentes ; et

recevoir (1010A ; 1010A1 ; 1110), depuis le dispositif de communication sans fil (712), une transmission MsgA, la transmission MsgA comprenant une charge utile PUSCH de MsgA transmise dans un PO qui chevauche au moins partiellement une bande de garde entre deux sous-bandes adjacentes.

15. Station de base (702) selon la revendication 14, dans laquelle la station de base (702) est également adaptée pour réaliser le procédé selon l'une quelconque des revendications 9 à 13.

EP 4 055 976 B1

CCA SUCCESSFUL

gNB
TRANSMISSION

D D D D D D D D D

gNB INITIATED COT PERIOD (NOT SHARED)

CCA SUCCESSFUL

gNB
TRANSMISSION

D D D D D

UE
TRANSMISSION

U U U

gap < 16 µs

gNB INITIATED COT PERIOD SHARED WITH UL
TRANSMISSIONS

*FIG. 1*

FIG. 2

20 MHz LBT SUBBAND

GUARD BANDS

80 MHz BWP

SINGLE WIDEBAND CARRIER

EP 4 055 976 B1

```
          ┌──────┐                                    ┌──────┐
          │  UE  │                                    │ eNB  │
          └──────┘                                    └──────┘
             │                                           │
             │              RA PREAMBLE                  │
             │──────────────────────────────────────────▶│
             │                                           │
             │   RA RESPONSE, TA, T-RNTI, GRANT FOR MSG 3 │
             │◀──────────────────────────────────────────│
             │                                           │
             │              MSG 3, C-RNTI/ID              │
             │──────────────────────────────────────────▶│
             │                                           │
             │        MSG 4, CONTENTION RESOLUTION        │
             │◀──────────────────────────────────────────│
             │                                           │
             │                                           │
```

**FIG. 3**

```
          ┌──────┐                                    ┌──────┐
          │  UE  │                                    │ gNB  │
          └──────┘                                    └──────┘
             │                                           │
             │              RA PREAMBLE                  │
   MSG A ⎰   │──────────────────────────────────────────▶│
         ⎱   │              MSG A PUSCH                   │
             │──────────────────────────────────────────▶│
             │                                           │
             │            TA, C-RNTI, CR-ID              │
             │◀──────────────────────────────────────────│   MSG B
             │                                           │
```

**FIG. 4**

**FIG. 5**

**FIG. 6**

EP 4 055 976 B1

*FIG. 7*

CHANNEL 2

CHANNEL 1

CHANNEL 0

PO2 OF MSG A PUSCH CONFIGURATION 2

PO1 OF MSG A PUSCH CONFIGURATION 1

PO0 OF MSG A PUSCH CONFIGURATION 0

*FIG. 8*

UE

gNB

900. CONFIGURING ONE OR MULTIPLE MSG A PUSCH CONFIGURATIONS OCCUPYING GUARD BANDS

902. PERFORMS LBT OPERATION PRIOR TO A MSG A TRANSMISSION

904. USE THE GUARD BAND BETWEEN TWO ADJACENT SUBBANDS IF BOTH OF THEM HAVE PASSED LBT

906. SIGNALING THE gNB WHETHER THE MSG A PAYLOAD TRANSMISSION IS OCCUPYING GUARD BANDS

908. THE gNB MONITORS AND PROCESSES RECEPTION OF THE DATA AND DECIDE IF TO SCHEDULE RESOURCES IN A GUARD BAND FOR SUBSEQUENT TRANSMISSIONS

*FIG. 9*

```
┌────────┐                                                                    ┌────────┐
│  WCD   │                                                                    │   BS   │
│  712   │                                                                    │  702   │
└────┬───┘                                                                    └────┬───┘
     │                      1000.  UE CAPABILITY INFO                              │
     │ - - - - - - - - - - - - - - - - - - - - - - - - - - - - - - - - - - - - - ▶│
     │                                                                            │
     │   1002.  ONE OR MORE MSG A PUSCH CONFIGURATIONS INCLUDING AT LEAST ONE      │
     │       PO THAT OVERLAPS A GUARD BAND BETWEEN ADJACENT SUBBANDS               │
     │◀───────────────────────────────────────────────────────────────────────── │
```

┌──────────────────────────────────────────────────────────┐
│  1004.  SELECT PRACH PREAMBLE AND PO (HERE, PO IS ONE THAT │
│  OVERLAPS A GUARD BAND BETWEEN TWO ADJACENT SUBBANDS)      │
└──────────────────────────────────────────────────────────┘

┌──────────────────────────────────────────────────────────┐
│  1006.  PERFORM LBT PROCEDURE ON THE TWO ADJACENT SUBBANDS │
│  OF THE GUARD BAND OVERLAPPED BY THE SELECTED PO           │
└──────────────────────────────────────────────────────────┘

┌──────────────────────────────────────────────────────────┐
│  1008.  DETERMINE WHETHER THE SELECTED PO IS USABLE BASED ON│
│  THE LBT OUTCOMES FOR THE TWO ADJACENT SUBBANDS           │
└──────────────────────────────────────────────────────────┘

┌──────────────────┬───────────────────────────────────────────────────────────┐
│ 1010A. PERFORM MsgA│ 1010A1.  MSG A: PREAMBLE + MsgA PUSCH PAYLOAD, WHERE MsgA PAYLOAD IS │
│ TRANSMISSION USING │ TRANSMITTED IN THE SELECTED PO THAT OVERLAPS THE GUARD BAND │
│ THE SELECTED PO, IF├───────────────────────────────────────────────────────────┤
│ THE SELECTED PO IS │ 1010A2.  INDICATION OF WHETHER THE MSG A PAYLOAD TRANSMISSION IS │
│ USABLE             │ OCCUPYING GUARD BANDS │
└──────────────────┴───────────────────────────────────────────────────────────┘

┌──────────────────────────────────────────────────────────────────────────────┐
│ 1010B.  PERFORM MsgA TRANSMISSION USING NEW PO, IF THE SELECTED PO IS NOT USABLE│
│   ┌ ─ ─ ─ ─ ─ ─ 1010B1.  SELECT NEW PO THAT IS USABLE ─ ─ ─ ─ ─ ─ ┐          │
│                                                                                │
│                  1010B2.  MSG A: PREAMBLE + MsgA PUSCH PAYLOAD, WHERE MsgA PAYLOAD IS │
│                  TRANSMITTED IN THE NEW SELECTED PO                             │
└──────────────────────────────────────────────────────────────────────────────┘

┌──────────────────────────────────────────────────────────────────────────────┐
│                         1012.  CONTINUE RA PROCEDURE                            │
└──────────────────────────────────────────────────────────────────────────────┘

*FIG. 10*

```
┌──────────┐                                                                    ┌──────────┐
│   WCD    │                                                                    │    BS    │
│   712    │                                                                    │   702    │
└──────────┘                                                                    └──────────┘
      │                          1100.  UE CAPABILITY INFO                            │
      │ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ▶│
      │                                                                               │
      │     1102.  ONE OR MORE MSG A PUSCH CONFIGURATIONS INCLUDING AT LEAST ONE      │
      │         PO THAT OVERLAPS A GUARD BAND BETWEEN ADJACENT SUBBANDS               │
      │◀──────────────────────────────────────────────────────────────────────────── │
```

1104.  SELECT PRACH PREAMBLE AND PO (HERE, PO IS ONE THAT OVERLAPS A GUARD BAND BETWEEN TWO ADJACENT SUBBANDS)

1106.  PERFORM LBT PROCEDURE ON THE TWO ADJACENT SUBBANDS OF THE GUARD BAND OVERLAPPED BY THE SELECTED PO

1108.  DETERMINE WHETHER THE SELECTED PO IS USABLE BASED ON THE LBT OUTCOMES FOR THE TWO ADJACENT SUBBANDS

1110.  MSG A: PREAMBLE + MsgA PUSCH PAYLOAD, WHERE MsgA PAYLOAD IS TRANSMITTED IN THE SELECTED PO THAT OVERLAPS THE GUARD BAND

1112.  INDICATION OF WHETHER THE MSG A PAYLOAD TRANSMISSION IS OCCUPYING GUARD BANDS

1114.  MONITOR AND PROCESS RECEPTION THE MsgA PAYLOAD

1116.  DECIDE WHETHER TO SCHEDULE RESOURCES IN THE GUARD BAND FOR SUBSEQUENT TRANSMISSIONS

1118.  SCHEDULE RESOURCES IN THE GUARD BAND FOR SUBSEQUENT TRANSMISSIONS, IN ACCORDANCE WITH DECISION OF STEP 1116

**FIG. 11**

1200

CONTROL SYSTEM
1202

NETWORK
INTERFACE
1208

PROCESSOR(S)
1204

MEMORY
1206

RADIO UNIT(S)
1210

TX(S) 1212

RX(S) 1214

1216

1216

**FIG. 12**

RADIO ACCESS NODE
1200

MODULE(S)
1400

**FIG. 14**

**FIG. 13**

EP 4 055 976 B1

1500

1512

TRANSCEIVER(S)
1506

1512

| MEMORY 1504 | PROCESSOR(S) 1502 |
|---|---|

TX(S) 1508

RX(S) 1510

**FIG. 15**

UE
1500

MODULE(S)
1600

**FIG. 16**

**FIG. 17**

1800

HOST COMPUTER 1802

SW 1810 | HOST APPLICATION 1812

HW 1804 | COMMUNICATION INTERFACE 1806

PROCESSING CIRCUITRY 1808

1828

1816

BASE STATION 1818

SW 1832

HW 1820 | COMMUNICATION INTERFACE 1822

RADIO INTERFACE 1824

PROCESSING CIRCUITRY 1830

UE 1814

SW 1840 | CLIENT APPLICATION 1842

HW 1834 | RADIO INTERFACE 1836

PROCESSING CIRCUITRY 1838

1826

**FIG. 18**

BEGIN

HOST COMPUTER PROVIDES USER DATA
1900

⟷

HOST COMPUTER EXECUTES HOST APPLICATION
1902

HOST COMPUTER INITIATES TRANSMISSION CARRYING THE USER DATA TO THE UE
1904

BASE STATION TRANSMITS THE USER DATA
1906

UE EXECUTES THE CLIENT APPLICATION
1908

END

**FIG. 19**

BEGIN

HOST COMPUTER PROVIDES USER DATA
2000

HOST COMPUTER INITIATES TRANSMISSION CARRYING THE USER DATA TO THE UE
2002

UE RECEIVES THE USER DATA
2004

END

**FIG. 20**

BEGIN

UE RECEIVES INPUT
DATA PROVIDED AT
HOST COMPUTER
2100

UE EXECUTES
CLIENT
APPLICATION
2104

UE PROVIDES USER
DATA
2102

UE EXECUTES
CLIENT
APPLICATION
2106

UE INITIATES
TRANSMISSION OF THE
USER DATA TO THE
HOST COMPUTER
2108

HOST COMPUTER
RECEIVES USER DATA
TRANSMITTED FROM
THE UE
2110

END

FIG. 21

BEGIN

BASE STATION
RECEIVES USER DATA
FROM UE
2200

BASE STATION INITIATES
TRANSMISSION OF USER
DATA TO THE HOST
COMPUTER
2202

HOST COMPUTER
RECEIVES THE USER
DATA
2204

END

FIG. 22

**EP 4 055 976 B1**

## REFERENCES CITED IN THE DESCRIPTION

### Patent documents cited in the description

- WO 62931585 A

### Non-patent literature cited in the description

- Study on NR-based access to unlicensed spectrum, Release 16. *3GPP Technical Report (TR) 38.889*

- The MAC entity may stop ra-ResponseWindow (and hence monitoring for Random Access Response(s)) after successful reception of a Random Access Response containing Random Access Preamble identifiers that matches the transmitted PREAMBLE_INDEX. *3GPP TS 38.321*
- **ERICSSON.** Channel Structure for Two-Step RACH. *3GPP DRAFT; R1-1910906,* 05 October 2019